# EUROPÄISCHE PATENTSCHRIFT

(11) **EP 1 113 393 B1**
(45) Veröffentlichungstag und Bekanntmachung des Hinweises auf die Patenterteilung: **02.11.2005**
(21) Anmeldenummer: 00890384.1
(22) Anmeldetag: 22.12.2000
(51) Int. Cl.: G06T 7/00

(54) **Verfahren und Anordnung zur Prüfung von Gegenständen**
Object inspection process and arrangement
Procédé et arrangement pour l'inspection d'objets

(30) Priorität: 29.12.1999 AT 220599
(43) Veröffentlichungstag der Anmeldung: 04.07.2001
(73) Patentinhaber: ARC Seibersdorf research GmbH, 1010 Wien (AT)
(72) Erfinder: Penz, Harald, Dr., 1120 Wien (AT); Vrabl, Andreas, Dipl.-Ing., 1100 Wien (AT); Krattenthaler, Werner, Dr., 2344 Maria Enzersdorf (AT); Mayer, Konrad, Dipl.-Ing., 1230 Wien (AT)
(74) Vertreter: Wildhack, Helmut

(56) Entgegenhaltungen:
- WO-A-99/60517
- KRATTENTHALER W ET AL: "Point correlation: a reduced-cost template matching technique" PROCEEDINGS OF THE INTERNATIONAL CONFERENCE ON IMAGE PROCESSING (ICIP) AUSTIN, NOV. 13 - 16, 1994, LOS ALAMITOS, IEEE COMP. SOC. PRESS, US, Bd. 3 CONF. 1, 13. November 1994 (1994-11-13), Seiten 208-212, XP010145956 ISBN: 0-8186-6952-7
- TANIMOTO S L: "TEMPLATE MATCHING IN PYRAMIDS" COMPUTER GRAPHICS AND IMAGE PROCESSING, ACADEMIC PRESS. NEW YORK, US, Bd. 16, 1981, Seiten 356-369, XP000604892
- YOSHIMURA S ET AL: "Fast template matching based on the normalized correlation by using multiresolution eigenimages" INTELLIGENT ROBOTS AND SYSTEMS '94. 'ADVANCED ROBOTIC SYSTEMS AND THE REAL WORLD', IROS '94. PROCEEDINGS OF THE IEEE/RSJ/GI INTERNATIONAL CONFERENCE ON MUNICH, GERMANY 12-16 SEPT. 1994, NEW YORK, NY, USA,IEEE, 12. September 1994 (1994-09-12), Seiten 2086-2093, XP010142022 ISBN: 0-7803-1933-8

## Beschreibung

Die Erfindung betrifft ein Verfahren gemäß dem Oberbegriff des Patentanspruches 1. Des weiteren betrifft die Erfindung eine Anordnung gemäß dem Oberbegriff des Patentanspruches 10. Des weiteren betrifft die Erfindung eine Verwendung des erfindungsgemäßen Verfahrens bzw. eine Verwendung der erfindungsgemäßen Anordnung.

Aus KRATTENTHALER W ET AL: "Point correlation: a reduced-cost template matching technique" PROCEEDINGS OF THE INTERNATIONAL CONFERENCE ON IMAGE PROCESSING (ICIP) AUSTIN, NOV. 13 - 16, 1994, LOS ALAMITOS, IEEE COMP. SOC. PRESS, US, Bd. 3 CONF. 1, 13. November 1994 (194-11-13), Seiten 208-212, XP010145956 ISBN: 0-8186-6952-7 sind ein Verfahren und eine Anordnung der eingangs genannten Art bekannt.

Die Erfindung soll ein Verfahren und eine Anordnung erstellen, die zur automatischen Prüfung von Gegenständen dienen, wobei die Gegenstände mit einem elektronenoptischen Aufnahmegerät aufgenommen werden, insbesondere um festzustellen, ob die Oberfläche der Gegenstände bestimmte Kriterien erfüllt. Dazu werden Ist-Bildpunkte der Ist-Bilder der Gegenstände mit vorgegebenen Soll-Bildpunkten verglichen, wobei jedoch die Ausrichtung bzw. Lage des Gegenstandes ohne Belang sein soll. Auch soll eine Identifikation von Gegenständen möglich werden bzw. eine Überprüfung dahingehend möglich sein, ob tolerierbare Abweichungen von einem vorgegebenen Sollbild des Gegenstandes über- oder unterschritten werden. Für eine Feststellung der Identität des Gegenstandes soll eine maximale Ähnlichkeit zwischen dem Bild des Gegenstandes und einem oder mehreren verschiedenen möglichen Erscheinungsbildern des Gegenstandes festgestellt werden können.

Bei bekannten Verfahren wird zuerst die Lage des Gegenstandes festgestellt und darauffolgend eine Überprüfung des aufgenommenen Bildes unter Berücksichtigung der gefundenen Lage durchgeführt. Bei der Lageerkennung erfolgt eine Suche nach bestimmten Bildmerkmalen, z.B. nach Rändern, Kanten oder charakteristischen Mustern, den sogenannten Paßpunkten. Bei hohen Genauigkeitsanforderungen treten dabei jedoch Probleme auf. Die gefundenen Positionsparameter sind nur dort genau, wo die Objektlage genau vermessen wurde, d.h. in der lokalen Umgebung eines Paßpunktes. Durch verschiedene Ursachen kann es jedoch dazu kommen, dass bei Feststellung der Übereinstimmung von Paßpunkten in einem Bereich des Gegenstandes diese Übereinstimmung in einem anderen Bereich des Gegenstandes nicht gegeben sein muß. Stimmt die von einem Bereich des Gegenstandes ermittelte Übereinstimmung der Paßpunkte nicht für einen anderen Bereich des Gegenstandes, so führt dies zu einer vermeintlichen Erkennung von Fehlern bzw. zu einer Fehlinterpretation der Bildinhalte.

Bei der Aufnahme mit einer Zeilenkamera kann der Gegenstand gegenüber dem Transportmechanismus einen Schlupf aufweisen. Das kann zu Verdrehungen und Verzerrungen innerhalb des aufgenommenen Bildes führen. Dies tritt z.B. auf, wenn einzelne zu prüfende Banknoten mit einem Riementransport für die Aufnahme mittels einer Zeilenkamera schnell bewegt werden. Es kann auch durch unruhige Führung von Gegenständen, z.B. Papierbögen aufgrund des Flatterns eines Papierbogens zu lokalen Aufnahmeverzerrungen kommen, die innerhalb einer Bildaufnahme unterschiedliche perspektivische Abbildungsverhältnisse ergeben.

Des weiteren kann das Material, aus dem der zu prüfende Gegenstand besteht, unterschiedlichen Ausdehnungsvorgängen bzw. Verwerfungen unterworfen sein, sodaß es lokal zu Positionsabweichungen kommt. Dies trifft insbesondere auf Papier und andere weiche und dehnbare Materialien zu; dies trifft aber auch auf sehr feinstrukturierte Printplatten zu, bei denen thermische Ausdehnungen bereits zu lokalen Positionsveränderungen führen können.

Durch einen Produktionsprozeß bedingt, können des weiteren Erscheinungsformen ein und desselben Gegenstandes lokal stark variieren. Es können Bildteile gegeneinander verschoben oder sogar leicht verzerrt sein, ohne dass dies jedoch als Fehler gewertet werden soll. Ein Beispiel hiefür sind die Sicherheitsmerkmale auf Banknoten, die gegenüber dem Druckbild verschoben sein dürfen. Dies gilt auch für weitere durch unterschiedliche Druckvorgänge, wie z.B. Tiefdruck, Offsetdruck und Siebdruck hergestellte Druckbilder auf Banknoten, die bestimmte Lageabweichungen bzw. gegenseitige Positionsdifferenzen aufweisen dürfen.

Ziel der Erfindung ist es, ein Verfahren und eine Anordnung zu erstellen, mit denen in einfacher, rascher und exakter Weise eine Qualitäts- und/oder Identitäts- und/oder Lageprüfung bzw. -erkennung von Gegenständen möglich wird.

Erfindungsgemäß wird dies bei einem Verfahren der eingangs genannten Art durch die im Kennzeichen des Anspruches 1 angeführten Merkmale erreicht. Eine erfindungsgemäße Anordnung der eingangs genannten Art ist durch die im Kennzeichen des Anspruches 10 angeführten Merkmale charakterisiert.

Das erfindungsgemäße Verfahren und die erfindungsgemäße Anordnung ermöglichen eine Prüfung des gesamten Gegenstandes oder von Teilbereichen, wobei die Prüfung nach vorab festgelegten oder während der Prüfung sich ergebenden Kriterien mit einer wählbaren Anzahl von Soll-Bildpunkten und/oder mit zumindest einem auswählbaren Ähnlichkeitsmaß und/oder mit komprimierten und/oder extrahierten Datenmengen für eine wählbare Anzahl von Ist-Bildern des Gegenstandes vorgenommen werden kann; die erhaltenen Ähnlichkeitswerte werden unter Berücksichtigung bzw. in Abhängigkeit von vorgegebenen Prüfzielen ausgewertet.

Ein besonderer Vorteil der erfindungsgemäßen Vorgangsweise besteht darin, dass bei unterschiedlichen Qualitätsanforderungen an unterschiedliche Bereiche des Gegenstandes die Prüfung den tatsächlichen Erfordernissen angepaßt werden kann und es werden nur die Teilbereiche, die tatsächlich genau überprüft werden müssen und somit hohe Rechenzeit in Anspruch nehmen, überprüft, wogegen man sich bei unkritischen Bereichen mit einer Prüfung, z.B. auf einer groben Auflösungsstufe, d.h. auf einer Stufe hoher Kompression der Datenmenge, oder mit einer Prüfung mit einer reduzierten Anzahl von Soll-Bildpunkten zufrieden gibt.

Sofern die Berechnung der Ähnlichkeitswerte unter Zugrundelegung der ausgewählten Punktmengen der Soll-Bildpunkte und der über die Transformation den Soll-Bildpunkten zugeordneten Ist-Bildpunkte zeitkritisch wird, so kann das für eine erste Soll-Bildpunkt-Menge errechnete Ähnlichkeitsmaß für eine Positionsbestimmung, zur Fehlererkennung und/oder zur Identifikation eines Gegenstandes oder eines Teilbereiches des Gegenstandes oder zu einem ersten Vergleich des Gegenstandes mit einem oder einer Anzahl von vorgegebenen Soll-Bildpunkten des Gegenstandes herangezogen werden, womit die folgende Prüfung beträchtlich erleichtert wird. Die erfindungsgemäße Vorgangsweise ist von Vorteil für die Überprüfung von Bildbereichen, bei denen die Möglichkeit besteht, dass sie sich aufgrund von Ungenauigkeiten bei der Herstellung des Gegenstandes, z.B. Druckungenauigkeiten überlappen; die Vorgangsweise gemäß diesen Ansprüchen hat auch den Vorteil, dass eine doppelte Prüfung von Ist-Bildpunkten vermieden wird.

Die Merkmale der Ansprüche 2 und 11 sind vorteilhaft, um die Schnelligkeit der Prüfung zu erhöhen; aufgrund der Reduktion der zu bearbeitenden Datenmengen kann die Prüfung rascher durchgeführt werden, ohne jedoch dadurch die Genauigkeit zu beeinträchtigen.

Wenn die Merkmale des Anspruches 3 vorgesehen werden, so trägt dies zur Erhöhung der Flexibilität bzw. Anpassbarkeit der erfindungsgemäßen Vorgangsweise an unterschiedliche Aufgabenstellungen bei; diese Flexibilität und Anpassbarkeit wird insbesondere in Kombination mit den im Kennzeichen des Anspruches 1 aufscheinenden Merkmalen erreicht, d.h. durch die Möglichkeit verschiedene Transformationen, Ähnlichkeitsmaße, Soll-Bildpunktmengen bzw. Ist-Bilder nach den Prüfgegebenheiten bzw. nach der Art des Gegenstandes auswählen zu können. Es kann eine raschere Abwicklung des Prüfungsverfahrens erfolgen, wenn auf die in vorangehenden Prüfschritten ermittelten Resultate für die folgenden Prüfschritte zurückgegriffen werden kann bzw. erhaltene Resultate folgenden Prüfschritten zugrundegelegt werden können.

Rechnerisch einfach wird die erfindungsgemäße Vorgangsweise, wenn die Merkmale des Anspruches 4 angewendet werden, da sich damit ein vereinfachter Aufbau der Rechensysteme und der Auswertung ergibt.

Die Merkmale der Ansprüche 5 und 6 geben vorteilhafte Vorgangsweisen für die Durchführung einer Kompression von Datenmengen bzw. für die Ermittlung des Ähnlichkeitsmaßes an. Die jeweilige Vorgangsweise wird insbesondere in Abhängigkeit von der Gestalt bzw. Flächenstruktur des Gegenstandes sowie der Art und Weise der durchgeführten Prüfung sowie dem Ziel der Prüfung gewählt.

Ein einfach zu bedienender und ausreichende Rechenkapazität besitzender Aufbau einer erfindungsgemäßen Anordnung ergibt sich mit den Merkmalen des Anspruches 12. Die vorgesehenen Speicher sind rasch und einfach mit gegenstandsentsprechenden Daten bzw. Parametern zu belegen und die erfindungsgemäße Anordnung kann damit rasch an unterschiedliche Prüfungserfordernisse bzw. unterschiedliche Gegenstände angepasst werden.

Beispiele für den Einsatz des erfindungsgemäßen Verfahrens und der erfindungsgemäßen Anordnung sind im Kennzeichen des Anspruches 13 angeführt.

Der Vorteil des erfindungsgemäßen Verfahrens ist, dass es für eine schnelle Echtzeitverarbeitung sehr gut geeignet ist. Mit wenig Aufwand an elektronischen Komponenten kann eine Vielzahl von unterschiedlichen Aufgaben bzw. Kombinationen von Verarbeitungsschritten effizient durchgeführt werden.

Die Merkmalsextraktion, Kompression und Abspeicherung der Daten wird in der Regel für jedes aufgenommene Bild durchgeführt. Vorteilhafterweise werden dabei nur jene Bildbereiche des Ist-Bildes aufbereitet bzw. verarbeitet, die bei den nachfolgenden Schritten benötigt werden. Diese Bildbereiche werden meist vorab festgelegt.

Für die notwendigen Rechenoperationen werden erfindungsgemäß schnelle elektronische Schaltkreise bzw. schnelle Algorithmen für programmierbare Logikbausteine oder Signalprozessoren eingesetzt, sodaß die Kompression bzw. Merkmalsextraktion weniger Zeit beansprucht, als zwischen zwei Bildaufnahmen vergeht. Pro aufgenommenem Ist-Bildpunkt benötigt z.B. eine zweistufige Kompression von Grauwerten durch Gauß-gewichtete Filterung und eine zusätzlich benötigte zweistufige Kantenextraktion mit einem schnellen Signalprozessor nur wenige Nanosekunden.

Ein Vorteil des Verfahrens ist, dass erfindungsgemäß die Merkmalsextraktionen bzw. Bildkompressionen von einer eigenen Recheneinheit parallel zu den weiteren Prüfschritten erfolgen können. Während die Transformationen und Ähnlichkeitswerte für ein aufgenommenes Bild berechnet werden, kann die Einheit für die Datenkompression bzw. Merkmalsextraktion gleichzeitig schon das nächste Ist-Bild bearbeiten und vorbereiten.

Eine für das Zeitverhalten des Verfahrens wichtige Eigenschaft ist es, dass erfindungsgemäß für die Prüfung Soll-Bildpunkt-Mengen mit vorher für die Aufgabenstellung speziell ausgewählten bzw. angepassten Soll-Bildpunkten verwendet werden. Im Gegensatz dazu verwenden bekannte Bildverarbeitungssysteme typischerweise ganze Bilder oder alle Punkte aus rechteckigen Bildausschnitten. Für manche Aufgabenstellungen wie z.B. Lagebestimmungen genügen aber erfindungsgemäß weit weniger Soll-Bildpunkte. Diese liegen oftmals weit verstreut, sind also im allgemeinen nicht benachbart.

Ein wesentlicher Vorteil der Erfindung ist eine beträchtliche Steigerung der Verarbeitungsgeschwindigkeit. Erfahrungen zeigen, dass eine kleine Anzahl passend ausgewählter Soll-Bildpunkte hinsichtlich Genauigkeit bei einer Positionsfindung oder Bildprüfung fast gleich gute oder in manchen Fällen sogar bessere Resultate liefert, als wenn alle Punkte eines zusammenhängenden Bildbereiches verwendet werden.

Durch die gewählte Speicheranordnung kann in einem Verarbeitungsschritt ein Bild gleichzeitig auf mehreren Kompressionsstufen geprüft werden. Da erfindungsgemäß alle Ist-Bild-Merkmale auf allen Kompressionsstufen in einem Speicher liegen, können durch eine geeignete Koordinatenauswahl bzw. Adressierung der Ist-Bildpunkte bei der Ermittlung eines Ähnlichkeitswertes Bildeigenschaften von unterschiedlichen Kompressionsstufen und/oder Merkmalsextraktionen einfließen. Beispielsweise können Gegenstände in wichtigen, markanten Teilen hochauflösend und in unkritischen Teilen in niedriger Auflösung (d.h. auf höherer Kompressionsstufe) geprüft und diese Daten dem Ähnlichkeitsmaß zugrundegelegt werden. Dadurch wird die Anzahl der Rechenoperationen und die Bearbeitungszeit eines Bildes auf ein Minimum gebracht.

Eine wesentliche Eigenschaft des Verfahrens ist, dass es sich für eine schnelle Pipeline-Verarbeitung eignet. Das heißt, dass die Verarbeitungseinheiten Ströme von Daten (z.B. Koordinaten, Grauwerte, Bildmerkmale) gleichzeitig und zeitversetzt verarbeiten können, so dass eine Einheit Berechnungen für einen Bildpunkt oder eine Bildpunkt-Menge durchführt, während die andere Einheit schon den (die) nächste(n) Bildpunkt oder Bildpunkt-Menge bearbeitet. Ein zeitkritisches Element ist der Ist-Bild/Merkmals-Speicher; auf diesen wird deshalb wahlfrei zugegriffen. Herkömmliche elektronische Halbleiterspeicher sind nur dann schnell, wenn in aufeinanderfolgenden Operationen auf Sequenzen von Daten mit aufsteigender Speicheradresse zugegriffen wird. Für alle Speicher mit Ausnahme des Istbild/Merkmals-Speichers ist diese Voraussetzung erfindungsgemäß gegeben. Für die sehr schnelle Durchführung des Verfahrens ist erfindungsgemäß vorgesehen, einen schnellen Ist-Bild/Merkmals-Speicher mit wahlfreiem Zugriff zu implementieren, etwa in Form eines schnellen, statischen Memory. Bei den anderen Speichern werden erfindungsgemäß die Informationen so angeordnet, dass aufeinanderfolgend benötigte Informationen in für einen schnellen Zugriff passender Reihenfolge optimiert abgelegt werden.

Die Vorsehung eines Speichers für mehrere auswählbare Ähnlichkeitsmaße erlaubt ein sehr schnelles Umschalten zwischen verschiedenen Ähnlichkeitsmaßten bzw. - algorithmen, die für verschiedene Prüfaufgaben bzw. Fragestellungen optimiert sind. Die Ermittlung der Lage eines Gegenstandes benötigt typischerweise die Anwendung zumindest eines anderen Ähnlichkeitsmaßes als die Prüfung auf Vollständigkeit oder Qualität. Wenn für derartige unterschiedliche Prüfaufgaben die gleiche Soll-Bildpunkt-Menge und dieselbe Transformation verwendet werden, brauchen die Koordinatentransformationen, das Holen der Informationen aus dem Ist-Bild-Speicher und die gegebenenfalls dabei durchzuführenden Interpolationen der Daten, um die Merkmale den entsprechenden durch die transformierten Koordinaten definierten Bildpunkten exakt zuordnen zu können, nicht wiederholt zu werden. Es genügt eine Neubewertung der Punktmenge durch Umschaltung des bzw. Neuauswahl eines Ähnlichkeitsmaßes, wobei gegebenenfalls schon berechnete Zwischenergebnisse, wie z.B. die Interpolationswerte der Ist-Bildpunkte, wiederverwendet werden können.

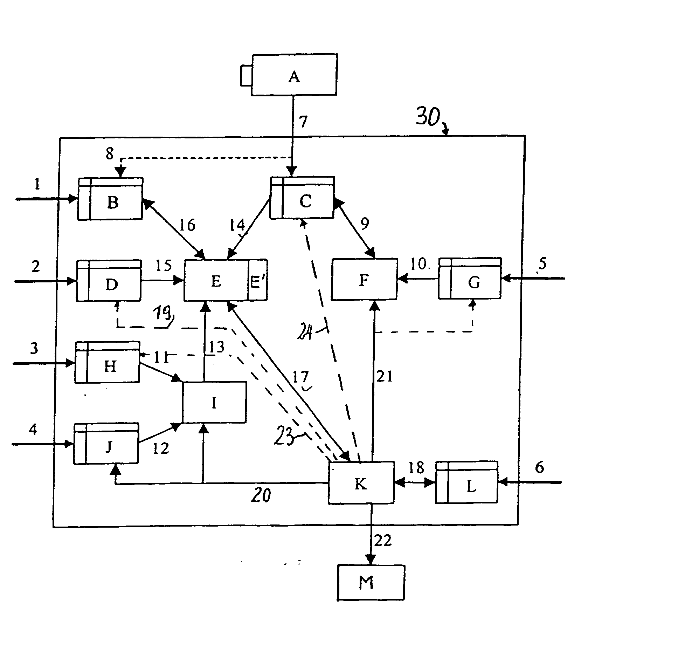

Im folgenden wird ein Ausführungsbeispiel einer erfindungsgemäßen Anordnung anhand der Zeichnung näher erläutert.

Die erfindungsgemäße Anordnung umfasst ein elektronenoptisches Aufnahmegerät A. Dieses elektronenoptische Aufnahmegerät kann eine elektronische Kamera, z.B. eine Flächenkamera oder eine Zeilen- bzw. TDI-Kamera oder ein Scanner sein. Mit diesem Aufnahmegerät A werden von den zu prüfenden Gegenständen Ist-Bilder aufgenommen. Über eine entsprechende Datenleitung 7 werden die aufgenommenen Ist-Bilder des Gegenstandes einem Speicher C für die Datenmenge der Ist-Bildpunkte zugeführt. In diesem Speicher C werden die wesentlichen charakteristischen Merkmale der Ist-Bildpunkte nach Merkmalsart und/oder Merkmalswert gespeichert. Die unterschiedlichen Merkmalsarten können z.B. Intensitäten, Kontraste, Kantenvektoren, Ortsfrequenzen, Helligkeitswechsel zwischen Bildpunkten, statistische Kennzahlen oder andere den einzelnen Ist-Bildpunkten zugeordnete Merkmalsarten sein. Diese Merkmale besitzen entsprechende zahlenmäßig festlegbare Merkmalswerte; diese Merkmalswerte werden zur Berechnung des Ähnlichkeitsmaßes herangezogen.

In eine, an den Speicher C über eine Datenleitung 9 angeschlossene Datenkompressions- bzw. Merkmalsextraktionseinheit F werden die Datenmengen der Ist-Bildpunkte einer Kompression- und/oder Merkmalsextraktion unterzogen. Die Datenmenge eines Ist-Bildpunktes umfasst auch die entsprechenden Koordinaten dieses Ist-Bildpunktes. Die reduzierten und/oder extrahierten Datenmengen bzw. Merkmale werden abgespeichert und zur Ermittlung von Ähnlichkeitsmaßen bereitgestellt.

Der Einheit F ist ein Speicher G zugeordnet, in dem Kompressions- und/oder Extraktionsalgorithmen gespeichert vorliegen. Der Speicher G wird über eine Datenleitung 5 mit extern vorbereiteten Kompressions- und/oder Extraktionsalgorithmen versorgt bzw. beschickt, die an die jeweilige Prüfsituation bzw. den jeweiligen Gegenstand angepasst sind. Über eine Datenleitung 10 werden von der Einheit F vom Speicher G ausgewählte Kompressions- und/oder Extraktionsalgorithmen angefordert bzw. die Einheit F damit beschickt.

Über die Datenleitung 9 besteht ein Datenaustausch zwischen dem Speicher C mit der Datenmenge der Ist-Bildpunkt und der Datenkompressions- und Merkmalsextraktionseinheit F, um entsprechende Datenmengen von Ist-Bildpunkten der Einheit F zuzuführen bzw. um die reduzierten und/oder extrahierten Datenmengen dem Speicher C zuzuführen und diese dort für eine weitere Verwendung abzulegen.

Die allenfalls reduzierten und/oder extrahierten Datenmengen betreffend die Ist-Bildpunkte werden über eine Datenleitung 14 einer Einheit E zur Bestimmung von Ähnlichkeitsmaßen zugeführt. An diese Einheit E ist ein Speicher D angeschlossen, in den über eine Datenleitung 2 extern vorbereitete Ähnlichkeitsmaße eingegeben bzw. abgespeichert werden können. Über eine Datenleitung 15 werden der Einheit E ausgewählte Ähnlichkeitsmaße aus dem Speicher D für die jeweilige Berechnung eines Ähnlichkeitsmaßes zugeführt.

Ein weiterer wesentlicher Bestandteil der Auswerteeinheit 30 ist ein Soll-Bildpunktspeicher H, in den über eine entsprechende Eingabeleitung 3 nach empirischen Kriterien ermittelte oder vorgegebene und/oder durch Rechenoperationen ermittelte und/oder aus Sollbildern des zu prüfenden Gegenstandes abgeleitete Soll-Bildpunkte abgespeichert werden. Diese Abspeicherung erfolgt mit vollständiger und/oder reduzierter bzw. komprimierter und/oder extrahierter Datenmenge, Koordinaten und/oder Merkmale für die einzelnen Soll-Bildpunkte. Dieser Soll-Bildpunktspeicher H steht über eine Datenleitung 11 mit einer Transformationseinheit I in Verbindung. Über die Datenleitung 11 werden die Daten ausgewählter Soll-Bildpunktmengen der Transformationseinheit I übermittelt.

An die Transformationseinheit I angeschlossen ist ein Speicher J für Transformationen, der über eine Eingabeleitung 4 mit einer Anzahl von vorbestimmten bzw. festgelegten Koordinatentransformationen beschickt worden ist. Über die Datenleitung 12 erfolgt eine Übermittlung ausgewählter Koordinatentransformationen an die Transformationseinheit I; die Transformationseinheit I transformiert die Koordinaten x, y, z der Soll-Bildpunkte entsprechend der jeweiligen aus dem Speicher J ausgewählten Transformation.

Die Bildpunkte werden entweder mit zwei- oder dreidimensionalen Koordinaten festgelegt, je nachdem, ob die Bildpunkte aus einer zweidimensionalen oder dreidimensionalen Betrachtungs- bzw. Abbildungsweise des Gegenstandes erhalten wurden.

Über eine Datenleitung 13 werden die Datenmengen der Soll-Bildpunkte, umfassend die Merkmale, d.h. Merkmalsart und Merkmalswert des jeweiligen Soll-Bildpunktes sowie die zugehörigen transformierten Koordinaten x', y', z' der Einheit E zur Bestimmung des Ähnlichkeitsmaßes zugeführt. In der Einheit E erfolgt mit dem jeweils aus der Anzahl vorgegebener Ähnlichkeitsmaße ausgewählten Ähnlichkeitsmaß die Berechnung eines Ähnlichkeitswertes zwischen den Merkmalen der Soll-Bildpunkte der ausgewählten Soll-Bildpunktmenge und den Merkmalen derjenigen Ist-Bildpunkte, die an den Stellen der transformierten Koordinaten x', y', z' der Soll-Bildpunkte liegen.

Es kann dabei der Fall auftreten, dass an der Stelle der transformierten Koordinaten x', y', z' eines Soll-Bildpunktes kein entsprechender Ist-Bildpunkt vorhanden ist; in diesem Fall wird entweder dieser Sollbildpunkt bei Berechnung des Ähnlichkeitsmaßes nicht berücksichtigt, oder es kann, sofern eine entsprechende Anzahl derartiger nicht berücksichtigter Soll-Bildpunkte vorliegt, eine andere Transformation herangezogen werden.
Bei der Berechnung bzw. Ermittlung der Ähnlichkeitsmaße werden die jeweiligen Merkmale eines Ist-Bildpunktes dem zugeordneten Soll-Bildpunkt gegenübergestellt und das Ähnlichkeitsmaß errechnet. Dabei kann vorgesehen sein, dass zur Ermittlung des Ähnlichkeitsmaßes zwischen charakteristischen Merkmalen von Ist-Bildpunkten und Soll-Bildpunkten eine gegebenenfalls normierte Kreuzkorrelation der Merkmale, z.B. Farb- bzw. Grauwerte oder Intensitätswerte der Ist-Bildpunkte und Soll-Bildpunkte vorgenommen wird oder die Summe der absoluten Differenzen der Merkmale, vorzugsweise der Grau- oder Farbwerte, der jeweiligen Bildpunkte ermittelt wird, wobei diese Differenzen gegebenenfalls gewichtet und/oder potenziert werden, wobei gegebenenfalls vor der Ermittlung des Ähnlichkeitsmaßes durch Bildung der absoluten Differenzen von den jeweils berechneten Differenzwerten der Merkmale ein dem jeweiligen Merkmal des Soll-Bildpunktes zugeordneter Toleranzwert subtrahiert wird. Die Auswerteeinheit 30 umfasst des weiteren einen Prioritätswertspeicher B, der über eine Eingabeleitung 1 mit Prioritätswerten initialisiert werden kann. Ein Anstoß für eine derartige Initialisierung erfolgt über die Datenleitung 8 bei jeder Neuaufnahme eines Ist-Bildes. Die Bildpunkte bzw. Speicherplätze des Prioritätswertspeichers B sind den Ist-Bildpunkten, die im Speicher C abgelegt sind, zugeordnet. Diese Zuordnung erfolgt über eine bestimmte Zuordnungsvorschrift. Des weiteren wird zumindest einer Anzahl, vorzugsweise allen Soll-Bildpunkten, jeweils ein Prioritätswert, z.B. eine Zahl, zugeordnet; die Datenmengen der Soll-Bildpunkte werden im Soll-Bildpunktspeicher H jeweils mit diesem Prioritätswert abgelegt. Allenfalls werden Soll-Bildpunkte zu Soll-Bildpunktmengen zusammengefasst, wobei derartige Soll-Bildpunktmengen Sollbildpunkte mit demselben Prioritätswert und mit Merkmalen derselben Merkmalsart aufweisen.

Die Bildpunkte des Prioritätswertspeichers B mit ihrem jeweiligen Prioritätswert sind den im Speicher C abgelegten Ist-Bildpunkten zugeordnet. Des weiteren werden die Koordinaten x, y, z der Soll-Bildpunkte über die jeweils gewählte Transformation auf die Bildebene der Ist-Bildpunkte abgebildet, sodass ein Vergleich zwischen den Prioritätswerten der Soll-Bildpunkte und den Prioritätswerten der Bildpunkte des Prioritätswertspeichers B erfolgen kann. In der Einheit E zur Bestimmung von Ähnlichkeitsmaßen erfolgt dieser Vergleich der über die Datenleitung 16 erhaltenen Prioritätswerte des Prioritätswertspeichers B und der Prioritätswerte der entsprechenden Soll-Bildpunkte, die im Soll-Bildpunktspeicher H abgelegt sind. Es ist vorgesehen, dass vor Ermittlung des Ähnlichkeitsmaßes ein Vergleich des Prioritätswertes des jeweiligen Soll-Bildpunktes und des Prioritätswertes des zugeordneten Bildpunktes des Prioritätswertspeichers erfolgt, welcher Bildpunkt über die jeweilige Transformation der Koordinaten des Soll-Bildpunktes und die Abbildung des Ist-Bildes auf die Speicherplätze des Prioritätswertspeichers dem jeweiligen Soll-Bildpunkt zugeordnet ist und dass für den Fall, dass der Prioritätswert des Soll-Bildpunktes größer oder gleich dem Prioritätswert dieses Bildpunktes ist, die Merkmale dieses Punktepaares bei Ermittlung des Ähnlichkeitsmaßes berücksichtigt werden und gegebenenfalls der Prioritätswert des Soll-Bildpunktes dem Bildpunkt des Prioritätswertspeichers zugeordnet bzw. auf diesen übertragen wird, und dass für den Fall, dass der Prioritätswert des Soll-Bildpunktes kleiner als der Prioritätswert des Bildpunktes ist, dieses Punktepaar bei Ermittlung des Ähnlichkeitsmaßes bzw. Errechnung des Ähnlichkeitswertes unberücksichtigt bleibt. Zweckmäßig ist dabei, dass die Anzahl der berücksichtigten und/oder nicht berücksichtigten Soll-Bildpunkte bzw. Punktepaare ermittelt und für die Bewertung des Prüfergebnisses bzw. für die Bewertung und allfällige Neuauswahl des Ähnlichkeitsmaßes herangezogen wird und/oder dass die Prioritätswerte von Ist-Bildpunkten, die von einer Prüfung ausgeschlossen werden sollen oder bei Berechnung des Ähnlichkeitsmaßes unberücksichtigt bleiben sollen, vorab auf einen Wert gesetzt werden, der den höchsten Prioritätswert eines Soll-Bildpunktes übersteigt.

Vorteilhaft ist dabei, wenn bei der Ermittlung des Ähnlichkeitsmaßes mit der Soll-Bildpunkt-Menge begonnen wird, deren Soll-Bildpunkte den höchsten Prioritätswert aufweisen.

Zwischen der Einheit E und einer Einheit K zur Beurteilung, ob ein vorgegebenes Abbruchkriterium für einen Prüfschritt erfüllt ist, oder ob die ermittelten Ähnlichkeitswerte ein vorgegebenes Abbruchkriterium erfüllen, erfolgt eine Übertragung der Daten über eine Datenleitung 17, in der die Ähnlichkeitswerte an die Beurteilungseinheit K übermittelt werden und seitens der Einheit K die Auswahl der für den nächsten Prüfungsschritt einzusetzenden Ähnlichkeitsmaße erfolgt.

Die Beurteilungseinheit K kann des weiteren für die Fortsetzung der Prüfung eine andere Datenkompression und/oder Merkmalsextraktion über die Datenleitung 21 auswählen bzw. vorgeben; über eine Datenleitung 20 kann eine andere vorgegebene Transformation ausgewählt bzw. vorgegeben werden; über die Datenleitung 23 können andere Sollbildpunkte ausgewählt werden; über die Datenleitung 24 können andere Ist-Bilder für den nächsten Prüfschritt ausgewählt werden. Über die Datenleitung 19 können andere Ähnlichkeitsmaße ausgewählt werden.

An die Beurteilungseinheit K ist über eine Datenleitung 18 ein Speicher L angeschlossen, der über eine Eingabe 6 mit vorbereiteten, auswählbaren Beurteilungsparametem beschickbar ist.

An die Beurteilungseinheit K ist über eine Datenleitung 22 eine Auswerte- bzw. Monitoreinheit M angeschlossen, die optische und/oder akustische Anzeigeeinrichtungen, entsprechende Aufzeichnungsgeräte bzw. Auswertegeräte für die erhaltenen Prüfergebnisse umfasst. Allenfalls umfasst bzw. steuert diese Einheit M auch auf die zu prüfenden Gegenstände einwirkende mechanische Einrichtungen, mit denen Gegenstände ausgeschieden oder bearbeitet oder auf diese eingewirkt werden können (kann).

Die Funktion der Auswerteeinheit 30 kann im wesentlichen durch die Beurteilungseinheit K gesteuert werden, insbesondere durch eine Beurteilung von Zwischenergebnissen, z.B. erhaltenen Ähnlichkeitswerten, vorgenommenen Transformationen usw., die mit den in dem Speicher L eingegebenen Beurteilungsparametem verglichen werden.

In der Einheit M kann auch eine Gesamtbeurteilung des Prüfergebnisses bzw. des zu prüfenden Gegenstandes erfolgen.

Die Kriterien nach denen ein neues Ähnlichkeitsmaß, eine neue Transformation, neue Soll-Bildpunkte, neue Ist-Bilder, neue Beurteilungskriterien herangezogen werden, sind für den jeweiligen Prüfzweck und/oder Gegenstand angepasst bzw. vorgegeben bzw. können durch entsprechende Neueingabe der entsprechenden Parameter verändert und angepasst werden.

Die Anzahl der Prüfschritte richtet sich nach dem jeweiligen Prüfzweck bzw. nach der Prüfungsaufgabe und den vorgegebenen Abbruchkriterien.

Die Kompression und/oder die Merkmalsextraktion betreffend die Datenmengen der Ist-Bildpunkte erfolgt vor der Berechnung des jeweiligen Ähnlichkeitsmaßes. Eine Berechnung des Ähnlichkeitsmaßes zwischen komprimierten bzw. extrahierten Merkmalen der Ist-Bildpunkte und Merkmalen der Soll-Bildpunkte erfolgt, nachdem die entsprechenden Merkmale und/oder Koordinaten der Soll-Bildpunkte ebenfalls einer gleichen Kompression und/oder Extraktion unterzogen wurden. Eine Kompression bzw. Extraktion von Datenmengen wird vorteilhafterweise derart durchgeführt, dass eine Kompression von Datenmengen dadurch durchgeführt wird, dass aus einer Anzahl, vorzugsweise vier, benachbarter Ist-Bildpunkte ein Mittelwert der entsprechenden Bildpunktmerkmale und/oder Koordinaten berechnet wird oder dass eine gewichtete Summe, insbesondere eine Gaußgewichtung in vertikaler und/oder horizontaler Richtung unter Einsatz eines vorgegebenen Reduktionsfaktors, beispielsweise zwei oder Vielfache dieses Wertes für die Merkmale und/oder Koordinaten einer Anzahl zusammenhängender Ist-Bildpunkte errechnet wird, oder dass für eine Menge von benachbarten Ist-Bildpunkten ein Merkmal errechnet bzw. ermittelt wird, z.B. die Richtung und/oder die Länge von Kanten, oder dass eine diskrete Kosinustransformation der Ortsfrequenzen von Ist-Bildpunkten erfolgt oder dass eine Wavelet-Transformation erfolgt oder dass eine Bestimmung der Ausprägung und Vorzugsrichtung von Bild- bzw. Musterkanten durch Gabor-Filter erfolgt.

In der Beurteilungseinheit K kann vorgesehen sein, dass der beste erhaltene Ähnlichkeitswert sowie die diesem Ähnlichkeitswert zugrundeliegende Transformation sowie die diesem Ähnlichkeitswert zugrundeliegende Soll-Bildpunkt-Menge als Zwischenergebnis angesehen werden und in Abhängigkeit vom besten Ähnlichkeitsmaß und der besten Transformation eine andere Ist-Bildpunkt-Menge zumindest einer Kompression und/oder zumindest einer Merkmalsextraktion unterzogen wird und damit die Prüfung fortgesetzt wird.

Dreidimensionale Koordinaten für die Ist-Bildpunkte bzw. die Soll-Bildpunkte fallen z.B. bei Computertomographien an, da dort dreidimensionale Datenmengen behandelt werden. Bei der Auswertung bzw. Beurteilung von Videofilmen kann die dritte Koordinate für das Indizieren der Einzelbilder verwendet werden.

Ein Abbruch der Prüfung aufgrund eines vorgegebenen Ähnlichkeitskriteriums kann z.B. dann erfolgen, wenn nur für eine vorgegebene Anzahl von vorgegebenen Transformationen und/oder für eine vorgegebene Menge von Soll-Bildpunkten die Ähnlichkeitswerte ermittelt werden sollen und diese Ergebnisse als ausreichend angesehen werden.

Im folgenden wird die Erfindung anhand von Ausführungsbeispielen näher erläutert. Diese Ausführungsbeispiele sollen jedoch keinesfalls die einzigen Anwendungsmöglichkeiten des erfindungsgemäßen Verfahrens darstellen und sind nicht einschränkend auszulegen, sondern lediglich als Illustrationsbeispiele zu verstehen.

### Beispiel für eine Lagebestimmung

### Aufgabenstellung:

Die Lage eines auf einer ebenen Fläche, z.B. Behälteroberfläche, aufgebrachten Druckes, z.B. eines Logos, soll bestimmt werden. Dieser Vorgang ist für viele weitere Flächen zu wiederholen. Es wird davon ausgegangen, dass Verdrehungen und Größenverzerrungen vernachlässigbar klein sind, der Druck aber in x- und y-Richtung gegenüber der Sollposition verschoben sein kann. Diese Abweichungen sind zu ermitteln.

### Erfindungsgemäße Vorgangsweise ohne Kompression:

Mit einer elektronischen Kamera wird eine Probeaufnahme gemacht. Die Kamera A liefert ein Grauwertbild. Die Lage des Druckes in dieser Probeaufnahme wird als Sollposition definiert. Mit einem vorgegebenen Software-Programm werden z.B. 50 Bildpunkte der Probeaufnahme als geeignete Soll-Bildpunkte ausgesucht und in den Soll-Bildpunktspeicher H geschrieben. Als charakteristisches Merkmal wird der Grauwert verwendet; damit wird eine Merkmalsextraktion vermieden. Kompressionen und Prioritätswerte werden bei dieser Vorgangsweise nicht benötigt. Bei den Koordinatentransformationen werden nur Verschiebungen untersucht. Jede dieser Verschiebungen verändert die Koordinaten der Soll-Bildpunkte derart, dass für die jeweilige Verschiebung konstante Werte a und b zu den Koordinaten x, y hinzugezählt werden. Die transformierten Koordinaten x', y' sind daher gleich x+a, y+b, wobei die Parameter a und b bestimmen, um wie viele Bildpunkte verschoben wird. Die Parameter a und b kennzeichnen daher in eindeutiger Weise die Verschiebung und werden in den Speicher J der Transformationseinheit I geschrieben. Es werden alle möglichen Kombinationen von a und b gebildet, sofern die Werte die maximal zu untersuchenden Verschiebungen nicht überschreiten.

Nach diesen Vorbereitungen erfolgt die eigentliche Lagebestimmung. Für jedes Ist-Bild, das die elektronische Kamera A liefert, werden alle Koordinatentransformationen im Speicher J der Transformationseinheit I, also alle zuvor hineingeschriebenen Verschiebungen, durch die Transformationseinheit I angewandt bzw. durchgeführt. Dabei werden jeweils die Koordinaten x, y aller Soll-Bildpunkte bzw. dieser Soll-Bildpunktmengen des Soll-Bildpunktspeichers H dieser Koordinatentransformation unterworfen. Daraus resultieren die Koordinaten x', y' der zugehörigen Ist-Bildpunkte. Die Grauwerte sind bei dieser Vorgangsweise das charakteristische Merkmal und werden daher für die Berechnung des Ähnlichkeitsmaßes herangezogen. Als Ähnlichkeitsmaß wird die normierte Kreuzkorrelation verwendet. Diese muss im Speicher D der Einheit E zur Bestimmung des Ähnlichkeitsmaßes vorhanden sein. Jene Koordinatentransformation, bei welcher der Wert der normierten Kreuzkorrelation am größten und die damit am besten ist, wird gespeichert. Die zu dieser Koordinatentransformation gehörigen Parameter a und b geben die Abweichung von der Sollposition an und bilden somit das Prüfergebnis, das beurteilt wird. Der Vorgang wird nun für das nächste Bild, das die elektronische Kamera liefert, wiederholt.

### Erfindungsgemäße Vorgangsweise mit Kompression:

Diese Vorgangsweise unterscheidet sich von der zuvor beschriebenen dadurch, dass die Ist-Bilder einer zweistufigen Kompression unterzogen werden. Zusammen mit dem Ist-Bild stehen dann drei Datenmengen auf unterschiedlichen Stufen für die Lagebestimmung zur Verfügung. Das Verfahren eignet sich besonders, wenn die maximal erlaubten Verschiebungen sehr groß sind. Der Ablauf ist jedoch gegenüber der zuvor beschriebenen Vorgangsweise deutlich schneller.

In der Vorbereitungsphase wird eine Probeaufnahme des Gegenstandes einer zweistufigen Kompression unterzogen. Dabei wird für jeden Bildpunkt der Probeaufnahme aus seinem Grauwert und den Grauwerten seiner unmittelbar horizontal, vertikal und diagonal benachbarten Bildpunkte eine Gauß-gewichtete Summe gebildet. Diese Summe stellt einen neuen Grauwert bzw. das neue Merkmal dar. Nur jeder zweite dieser neuen Bildpunkte in vertikaler und horizontaler Richtung wird ausgewählt und bildet einen Bildpunkt in der ersten Kompressionsstufe. Somit wird sowohl in vertikaler als auch in horizontaler Richtung eine Kompression mit dem Reduktionsfaktor 2 bzw. dem Gesamtreduktionsfaktor 4 erreicht. Dieser Vorgang wird mit dem Bild der ersten Kompressionsstufe statt des Bildes der Probeaufnahme wiederholt. Die so erhaltene zweite Kompressionsstufe hat sowohl in vertikaler als auch in horizontaler Richtung gegenüber der Probeaufnahme den Reduktionsfaktor 4 bzw. den Gesamtreduktionsfaktor 16. Für jede der drei Stufen werden mit einem vorgegebenen Software-Programm 50 geeignete Bildpunkte als Soll-Bildpunkte ausgewählt und in den Soll-Bildpunktspeicher eingetragen. Somit stehen dort die Daten dreier verschiedener Soll-Bildpunkt-Mengen zur Verfügung, je eine für die beiden Kompressionsstufen und eine für die nicht komprimierte Stufe. Die Soll-Bildpunkt-Menge für die höchste Kompressionsstufe ist dabei die erste, die für die Auswertung herangezogen wird. In den Speicher J der Transformationseinheit werden ebenfalls drei unterschiedliche Mengen von Koordinatentransformationen eingegeben. Die erste Menge wird in der zweiten und damit höchsten Kompressionsstufe eingesetzt. Wie bei der zuvor beschriebenen Vorgangsweise werden wiederum alle Verschiebungen mit den Parametern a und b eingetragen, sofern die Werte die maximal zu untersuchenden Verschiebungen nicht überschreiten. Dabei ist zu berücksichtigen, dass a und b angeben, um wie viele Bildpunkte der zweiten Kompressionsstufe verschoben wird. Da einem einzelnen dieser Bildpunkte auf Grund des Gesamtreduktionsfaktors 16 auch 16 Bildpunkte der Probeaufnahme entsprechen, ist die Anzahl der Verschiebungen im Vergleich zur zuvor beschriebenen Vorgangsweise ebenfalls um den Faktor 16 kleiner. Da im Gegenzug aber auch die Genauigkeit der Lagebestimmung darunter leidet, werden nun auch Koordinatentransformationen für die nächsthöhere, also die erste Kompressionsstufe bereitgestellt. Hierbei werden z.B. aber nur Verschiebungen berücksichtigt, deren Werte für a und b entweder 1, 0 oder -1 sind. Insgesamt werden also nur die 9 daraus resultierenden Kombinationsmöglichkeiten in den Speicher J der Transformationseinheit 1 eingetragen. Sie bilden die zweite Menge. Die dritte Menge von Koordinatentransformationen besteht wie die zweite aus 9 Verschiebungen, wobei wiederum die Parameter a und b die Werte 1, 0 oder-1 annehmen. Sie bezieht sich jedoch auf keine der Kompressionsstufen sondern auf das nicht komprimierte Bild. Sie dient zur abschließenden genauen Lagebestimmung.

Die elektronische Kamera liefert laufend Bilder, in denen die Lage des Drucks bestimmt werden soll. Das Bild wird zuerst mittels der Datenkompressionseinheit F der gleichen zweistufigen Kompression unterzogen, wie zuvor die Probeaufnahme. Dann werden mit der Transformationseinheit die in der ersten Menge von Koordinatentransformationen enthaltenen Verschiebungen für die Koordinaten x, y der Soll-Bildpunkte der ersten Soll-Bildpunkt-Menge durchgeführt. Die daraus resultierenden transformierten Koordinaten x', y' beziehen sich auf die zweite bzw. höchste Kompressionsstufe des Ist-Bildes. Die dort befindlichen Merkmale bzw. Grauwerte werden ausgelesen und für jede Verschiebung getrennt mit den Merkmalen bzw. Grauwerten der Soll-Bildpunkte verglichen. Als Ähnlichkeitsmaß wird die normierte Kreuzkorrelation verwendet. Diejenige Koordinatentransformation bzw. Verschiebung, bei welcher der höchste und damit beste Ähnlichkeitswert erreicht wird, stellt ein vorläufiges Ergebnis dar und wird abgespeichert. Das Verfahren wird mit der zweiten Soll-Bildpunkt-Menge fortgesetzt. Die Koordinatentransformationen, die dabei verwendet werden, setzen sich aus den Verschiebungen der zweiten Menge von Koordinatentransformationen und aus dem zuvor ermittelten vorläufigen Ergebnis zusammen. Dabei muss natürlich berücksichtigt werden, dass die als vorläufiges Ergebnis ermittelte Verschiebung sich auf eine höhere Kompressionsstufe bezieht. Bei der Zusammensetzungen der Verschiebungen bzw. Koordinatentransformationen muss daher der Reduktionsfaktor 2 berücksichtigt werden. So entstehen 9 neue Verschiebungen bzw. Koordinatentransformationen. Mit diesen werden die Koordinaten der Soll-Bildpunkte aus der zweiten Soll-Bildpunkt-Menge durch die Transformationseinheit I transformiert. Wieder wird in der Einheit E die normalisierte Kreuzkorrelation zwischen den Merkmalen der Ist-Bildpunkte an der Stelle der transformierten Koordinaten und den Merkmalen der zugehörigen Soll-Bildpunkte berechnet. Diejenige Koordinatentransformation bzw. Verschiebung, bei welcher der höchste und damit beste Ähnlichkeitswert erreicht wird, stellt wieder ein vorläufiges Ergebnis dar und wird abgespeichert. Der Vorgang wird analog für das Ist-Bild wiederholt. Die daraus resultierende Koordinatentransformation bzw. Verschiebung stellt das endgültige Ergebnis dar, das beurteilt wird.

### Beispiel für die Qualitätsprüfung eines einfachen Druckes

### Aufgabenstellung:

Der Aufdruck auf Verpackungsschachteln soll bezüglich Druckqualität überprüft werden. Als Mängel in der Druckqualität gelten z.B. fehlende Stellen im Druck, verdrehter Druck, Verwischungen, etc. Jede Verpackungsschachtel soll zwar den gleichen Aufdruck haben, kleine Drucktoleranzen bezüglich Lage und Helligkeit sind jedoch erlaubt.

### Erfindungsgemäße Vorgangsweise:

Es werden mehrere Probeaufnahmen von drucktechnisch einwandfreien Verpackungen gemacht. Aus diesen werden mit einem eigenen Programm die Soll-Bildpunkte für den Soll-Bildpunktspeicher abgeleitet. Jeder Soll-Bildpunkt erhält als Merkmal einen Grauwert. Weiters ist jedem Bildpunkt ein Toleranzwert zugeordnet. Der Grauwert ist im wesentlichen der mittlere Grauwert der Probeaufnahmen an den Koordinaten x, y, z des Soll-Bildpunktes. Der Toleranzwert ist ein Maß für die Streuung der Werte der Probeaufnahmen an den Koordinaten x, y, z des Soll-Bildpunktes.

Die elektronische Kamera liefert laufend Ist-Bilder, für die zuerst die Lage des Aufdrucks bestimmt wird. Dies geschieht mit einer der zuvor beschriebenen Vorgangsweisen, die als Ergebnis eine als beste beurteilte Koordinatentransformation liefern. Die Transformationseinheit benutzt diese, um die Koordinaten x, y, z der Soll-Bildpunkte auf die Koordinaten der Ist-Bildpunkte x, y, z zu transformieren. Für die Ermittlung des ersten Ähnlichkeitsmaßes werden die absoluten Differenzen der Merkmale bzw. Grauwerte um einen jeweiligen zum Soll-Bildpunkt gehörigen Toleranzwert vermindert und anschließend aufsummiert. Falls dabei die jeweilige absolute Differenz kleiner ist als der Toleranzwert, wird 0 aufsummiert. Beim zweiten Ähnlichkeitsmaß wird statt der Summe das Maximum gebildet. Beim dritten Ähnlichkeitsmaß wird die Anzahl der Summanden im ersten Ähnlichkeitsmaß, die ungleich 0 sind, bestimmt. Die Auswerteeinheit beurteilt nun diese drei Ähnlichkeitswerte und entscheidet, ob der Aufdruck als fehlerhaft zu bewerten ist.

### Beispiel für die Qualitätsprüfung eines Mehrfachdruckes

### Aufgabenstellung

Ebene Druckbilder, die abgesehen von Drucktoleranzen immer gleich aussehen sollen, müssen bezüglich ihrer Druckqualität überprüft werden. Jedes Bild wird in mehreren Druckschritten erzeugt, wobei jeweils gewisse Teile des Bildes gedruckt werden. Bei Überschneidungen werden die durch den neuen Druckschritt überlappten Teile vollständig zugedeckt. Die Lage der einzelnen Druckschritte zueinander kann leicht variieren, so dass die Größe der Überschneidungen nicht bekannt ist. Die daraus resultierenden Unterschiede sollen aber toleriert werden.

### Erfindungsgemäße Vorgangsweise:

Von jedem einzelnen Druckschritt werden getrennte Probeaufnahmen gemacht. Aus diesen werden mit einem eigenen Werkzeug bzw. Programm Soll-Bildpunkt-Mengen mit Merkmals- und Toleranzwerten ermittelt und in den Soll-Bildpunktspeicher H geschrieben. Für jeden Druckschritt gibt es genau eine zugehörige Soll-Bildpunkt-Menge. Diesen Mengen werden aufsteigende Prioritätswerte zugeordnet. Die Soll-Bildpunkt-Menge des ersten Druckschritts bekommt die niedrigste und die des letzten die höchste Priorität.

Die vom Aufnahmegerät A kommenden Ist-Bilder werden der Reihe nach geprüft. Alle Prioritätswerte in der Prioritätsmaske bzw. im Prioritätsspeicher B werden bei jedem Bild zunächst mit 0 initialisiert. Dann wird die Position des obersten Drucks mit einem der oben beschriebenen Verfahren bestimmt. Bei diesem Vorgang wird ein Soll-Bildpunkt nur dann bei der Berechnung des Ähnlichkeitsmaßes berücksichtigt, wenn dessen Prioritätswert größer ist als jener in der Prioritätsspeicher B an der Stelle der dem Ist-Bildpunkt zugeordneten Koordinaten für die Prioritätsmaske. Der Prioritätswert in dem Prioritätsspeicher B wird dabei nicht verändert. Nach dieser Lagebestimmung bildet die Transformationseinheit I mit der erhaltenen Koordinatentransformation die Koordinaten x, y, z der Soll-Bildpunkte auf Koordinaten x', y', z' der Ist-Bildpunkte ab und die Einheit E berechnet die Ähnlichkeitsmaße. Dabei werden wieder die Prioritätswerte der Soll-Bildpunkte mit jenen des Prioritätsspeichers B bei den, den Ist-Bildpunkten zugeordneten Koordinaten für den Prioritätsspeicher B verglichen. Sind die Prioritätswerte der Soll-Bildpunkte kleiner, werden diese Punkte nicht berücksichtigt. Sind sie aber gleich den Werten im Prioritätsspeicher B oder größer als diese, werden die Merkmale der zugehörigen Bildpunkte für die Berechnung der Ähnlichkeitsmaße verwendet. Weiters werden diese höheren Prioritätswerte an den entsprechenden Stellen des Prioritätsspeichers B eingetragen. Die ermittelten Ähnlichkeitswerte werden für eine abschließende Beurteilung gespeichert. Der Vorgang wird nun für die Soll-Bildpunktmenge mit dem nächstfolgend niedrigeren Prioritätswert in analoger Weise wiederholt usw. bis hinunter zur Soll-Biidpunkt-Menge mit dem niedrigsten Prioritätswert. Zum Schluss beurteilt die Beurteilungseinheit K die Gesamtqualität des Druckes anhand der gesammelten Ähnlichkeitswerte.

### Beispiel für die Qualitätsprüfung eines unvollständigen Musters

### Aufgabenstellung

Ein zugeschnittenes Druckwerk, z.B. Geldschein, soll hinsichtlich Druckqualität überprüft werden. Der Druck wird vor dem Zuschneiden aufgebracht und ist größer als der auszuschneidende Teil. Durch Schnitttoleranzen variiert der nach dem Schneiden sichtbare Druck. Trotzdem soll der gesamte ausgeschnittene Bereich, also auch die Randbereiche, bezüglich Druckqualität geprüft werden. Dies wird z.B. bei periodischen Hintergrundmustern, z.B. Wellenlinien, benötigt, wo aus großen bedruckten Bögen die benötigten Teile herausgeschnitten werden. Dabei wird aber meist nicht darauf geachtet, dass der Schnitt jeweils an der gleichen Stelle des periodischen Musters beginnt.

### Erfindungsgemäße Vorgangsweise

Mit einer Probeaufnahme wird das noch nicht zugeschnittene Druckwerk aufgenommen. Aus diesem Bild wird eine Soll-Bildpunkt-Menge generiert. Dabei werden genügend Punkte ausgewählt, um auch maximale Schnitttoleranzen zu berücksichtigen. Als Merkmal wird der Grauwert verwendet. Als Toleranzwert wird ein für alle Soll-Punkte gleicher, empirischer Wert gewählt. Die Soll-Bildpunkt-Menge erhält den Prioritätswert 1. Weiters erfolgt eine Probeaufnahme eines bereits zugeschnittenen Druckwerkes. Aus diesem wird eine Soll-Bildpunkt-Menge bestimmt, deren Soll-Bildpunkte keinen Merkmalswert besitzen, sondern nur Koordinaten. Diese Soll-Bildpunkt-Menge erhält die Priorität 2. Sie besteht aus allen Punkten der Probeaufnahme, die nicht zum zugeschnittenen Druckwerk gehören. Sie dient als Maske für den Hintergrund der Aufnahmen. Dieser wird als kontrastfärbig, insbesondere schwarz bzw. fast schwarz vorausgesetzt.

Die vom Aufnahmegerät kommenden Ist-Bilder werden der Reihe nach geprüft. Alle Prioritätswerte in dem Prioritätswertspeicher B werden bei jedem Bild zunächst mit 0 initialisiert. Dann wird die Position der Soll-Bildpunkt-Menge der Priorität 2 mit einem der oben beschriebenen Verfahren bestimmt. Für die daraus sich ergebende Koordinatentransformation werden die Prioritätswerte im Prioritätswertspeicher B an der Stelle der zu den Soll-Bildpunkten gehörigen Koordinaten der Ist-Bildpunkte auf 2 gesetzt. Die Berechnung eines Ähnlichkeitswertes ist bei diesem Schritt nicht erforderlich. Somit stehen im Prioritätswertspeicher die Werte 0 und 2. Nun wird die Lage bzw. Phase des Aufdrucks bestimmt. Hierzu kann wieder eines der oben beschriebenen Verfahren verwendet werde. Mit der dadurch gefundenen Koordinatentransformation wird das Ähnlichkeitsmaß für die eigentliche Qualitätsprüfung ermittelt. Hierfür wird die Soll-Bildpunktmenge mit der Priorität 1 herangezogen. Es werden genau jene Paare von Soll- und Ist-Bildpunkten berücksichtigt, für die der Prioritätswert im Prioritätsspeicher bei den Koordinaten der Ist-Bildpunkte kleiner oder gleich 1 ist. Als Ähnlichkeitsmaß dient die Summe der absoluten Differenzen zwischen den Merkmalen bzw. Grauwerten der Soll-Bildpunkte und der zugehörigen Ist-Bildpunkte jeweils vermindert um den zur Soll-Bildpunktmenge gehörigen Toleranzwert.

### Beispiel Multikompressionsstufenprüfung

### Aufgabenstellung

Kisten sollen anhand ihres Aufdrucks klassifiziert werden. Es soll eine Sortierung nach Hersteller erfolgen. Zu diesem Zweck wird ein System benötigt, das die Aufdrucke auf den Kisten jeweils einem von 1000 bekannten Aufdrucken und somit dem zugehörigen bekannten Hersteller richtig zuordnet. Das System soll bezüglich einer eventuellen Vergrößerung der Menge der bekannten Aufdrucke leicht erweiterbar sein.

### Erfindungsgemäße Vorgangsweise:

Von jedem bekannten Aufdruck wird eine Probeaufnahme benötigt. Für jede dieser Probeaufnahmen wird eine Merkmalsextraktion durchgeführt, bei der für die Konstruktion des Merkmals (der Merkmale) die Intensitätswerte der Kanten verwendet werden. Weiters werden unter Einsatz von Gaußfiltern zwei aufeinanderfolgende Kompressionsstufen berechnet. Die Kompressionen erfolgen jeweils um den Faktor 2 in vertikaler und horizontaler Richtung. Mit einem Software-Programm wird aus der Probeaufnahme, den beiden Kompressionsstufen und dem Bild mit den Kanten-Intensitätswerten eine zum zugehörigen Aufdruck gehörige Soll-Bildpunkt-Menge ermittelt. Diese wählt Punkte aus den Vorlagen derart aus, dass der gesamte Aufdruck dabei erfasst wird, aber Doppelauswertungen aus Effizienzgründen vermieden werden. Die Erfassung des gesamten Aufdrucks ist wichtig, da bei eventuellen Erweiterungen der Menge der bekannten Aufdrucke möglicherweise sehr ähnliche Aufdrucke dazukommen. Würde man nur Teile überprüfen bestünde die Gefahr einer Verwechslung. In der Nähe von Kanten werden Punkte aus dem Bild mit den Kanten-Intensitätswerten ausgewählt. Für die anderen Stellen werden vorzugsweise Punkte aus der zweiten Kompressionsstufe verwendet. Nur wenn dies wegen der geringen Auflösung nicht möglich ist, werden Punkte aus der ersten Kompressionsstufe bzw. direkt aus der Probeaufnahme ausgewählt. Dadurch wird die Soll-Bildpunkt-Anzahl klein gehalten und trotzdem eine gute Flächendeckung erzielt. Die ausgewählten Soll-Bildpunkte aus den Kompressionsstufen erhalten entsprechend den Kompressionsfaktoren höhere Gewichte bei der Ermittlung der Ähnlichkeitswerte, da sie größere Bereiche abdecken.

Für jedes Ist-Bild werden die gleichen Kompressionen und Merkmalsextraktionen durchgeführt, wie für die Probeaufnahme. Als Ähnlichkeitsmaß wird die Summe der quadrierten und gewichteten Abweichungen berechnet. Jene Soll-Bildpunkt-Menge, die dabei den kleinsten Wert liefert, ist das beste Ergebnis. Aus ihr kann auf den Hersteller geschlossen werden. Falls die Lage des Aufdrucks im Ist-Bild nicht genau bekannt ist, kann wieder eine der oben beschriebenen Positionsbestimmungen durchgeführt werden. Diese muss allerdings für jede Soll-Bildpunkte-Menge getrennt erfolgen. Es ist dabei ratsam, für diesen Zweck eigene, sehr kleine, Soll-Bildpunkt-Mengen zu verwenden, um die Dauer der Positionsbestimmung kurz zu halten.

### Beispiel Nummernerkennung

### Aufgabenstellung

Eine aufgedruckte 8-stellige Nummer soll erkannt und auf ihre Lesbarkeit (Druckqualität) überprüft werden. Für die Aufnahme wird eine Flächenkamera verwendet. Die Aufnahme ermittelt Grauwerte. Die Nummer hat immer genau 8 Stellen. Aus welchen Ziffern die Nummer besteht, soll aber festgestellt werden. Die Farbe der aufgedruckten Nummer ist immer dunkler als der Hintergrund. Der Hintergrund ist zwar weitgehend homogen, jedoch nicht unbedingt weiß sondern nur (hell)grau, so dass mit schwachem Kontrast gerechnet werden muss. Es kann davon ausgegangen werden, dass die Nummer nicht bzw. vernachlässigbar wenig verdreht ist. Die Lage (Koordinaten) der gesamten Nummer ist nicht bekannt, sondern nur der erlaubte Druckbereich. Weiters ist mit kleinen Verschiebungen der Ziffern untereinander (Drucktoleranzen) zu rechnen. Für die 10 verschiedenen Ziffern wird immer der gleiche Font verwendet. Größenschwankungen sind vernachlässigbar klein. Die Auflösung ist zwar fix, aber gering.

### Erfindungsgemäße Vorgangsweise:

Die Vorgangsweise wird in 3 Teile zerlegt:
- Bestimmungen der Lage der Gesamtnummer. Die Position der Gesamtnummer wird ermittelt, allerdings nur mit geringer Genauigkeit.
- Für jede der 8 Stellen in der Nummer wird festgestellt, welche Ziffer dort gedruckt ist. Durch die zuvor erfolgte Lagebestimmung der Gesamtnummer sind die ungefähren Positionen der Ziffern bereits bekannt. Die genaue Lagebestimmung der gedruckten Ziffern erfolgt aber erst in diesem Schritt.
- Die 8 erkannten Ziffern werden hinsichtlich ihrer Druckqualität überprüft. Dies erfolgt unter Zuhilfenahme der Ergebnisse aus dem vorigen Schritt. Die Ziffern und deren genaue Positionen sind daher schon bekannt.

### Bestimmung der Lage der Gesamtnummer

Da eine grobe Lagebestimmung ausreicht, wird diese nicht im Ist-Bild, sondern in der ersten Kompressionsstufe durchgeführt. Diese entsteht aus dem Ist-Bild durch Bildung eines Gauß-gewichteten Mittelwerts in vertikaler und horizontaler Richtung und anschließender Reduktion um Faktor 2 ebenfalls in vertikaler und horizontaler Richtung.

Da noch nicht bekannt ist, aus welchen Ziffern die Gesamtnummer besteht, wird für die Soll-Bildpunkte ein künstliches Muster verwendet. Dieses besteht aus einem schwarzen Rechteck auf weißem Grund. Die Soll-Bildpunkte beschreiben dieses Muster. Das Rechteck hat die Ausmaße, die der Gesamtnummer in der ersten Kompressionsstufe entsprechen. Als Ähnlichkeitsmaß wird die Summe der quadratischen Abweichungen verwendet. Es werden alle Verschiebungs-Koordintentransformationen untersucht, die jeweils einen Bildpunkt voneinander entfernt liegen und das schwarze Rechteck in der Kompressionsstufe so platzieren, dass es an eine erlaubte Position im Druckbereich für die Nummer zu liegen kommt. Es ist zu erwarten, dass der kleinste und damit beste Ähnlichkeitswert dann auftritt, wenn möglichst viele dunkle Bildpunkte, also Teile der aufgenommenen und komprimierten Nummer, auf das schwarze Rechteck treffen. Die Koordinatentransformation und damit die Position, bei der dies der Fall ist, wird als Zwischenergebnis gespeichert.

### Erkennung der Ziffern und deren Lagebestimmung

Ausgehend von der im vorigen Schritt gefundenen Position der Gesamtnummer wird nun der Typ und die Lage der an erster Stelle liegenden Ziffer ermittelt. Wegen der geringen Auflösung und des schwachen Kontrasts ist dies eine schwierige Aufgabe. Als wesentliches Merkmal wird erfindungsgemäß zuerst durch geeignete Filter festgestellt, welche Bildpunkte zum Vordergrund, also zu den Ziffern und welche zum Hintergrund gehören. Bildpunkte die sich eindeutig dem Vordergrund zuordnen lassen bekommen dabei den Wert 0, während die Hintergrundbildpunkte den Wert 100 bekommen. Bildpunkte, die sich nicht eindeutig zuordnen lassen, bekommen Zwischenwerte. Mit dieser Merkmalsextraktion ist keine Kompression verbunden. Es ist bei diesem Vorgang sogar sinnvoll, die Auflösung künstlich zu vergrößern, indem Merkmalswerte durch Interpolation der Ist-Bildpunkte dazugewonnen werden.

Das so gewonnene Bild wird nun mit den 10 verschiedenen für die einzelnen Ziffern vorbereiteten Soll-Bildpunkt-Mengen mit jeweils z.B. 60 Soll-Bildpunkten verglichen. Die Punktmengen sind den Ziffern 0 bis 9 zugeordnet und so aufgebaut, dass sie diese gut beschreiben und voneinander unterscheiden können. Diese Punktmengen werden nun mit jenem Bereich der Gesamtnummer verglichen, wo die erste gedruckte Ziffer vermutet wird. Da die Lage der Gesamtnummer nur ungefähr bekannt ist, erfolgt dieser Vergleich an mehreren Stellen. Als Koordinatentransformationen werden nur Verschiebungen untersucht, da Größenschwankungen und Verdrehungen per Voraussetzung nicht berücksichtigt werden müssen. Die Verschiebungen unterscheiden sich jeweils nur um die halbe Breite eines dieser Merkmalsextraktion entsprechenden Bildpunktes. Diese feine Überdeckung ist wichtig, um eine Fehlerkennung sicher zu vermeiden. Der Bereich, den die Verschiebungen abdecken, entspricht im wesentlichen der Genauigkeit, mit der zuvor die Gesamtnummer lokalisiert wurde. Es werden alle Kombinationen von Punktmengen und Verschiebungen gebildet. Für jede wird ein Ähnlichkeitswert berechnet. Als Ähnlichkeitsmaß wird die Summe der dritten Potenzen der absoluten Grauwertdifferenzen verwendet. Der kleinste Ähnlichkeitswert wird herausgesucht. Aus der zugehörigen Punktmenge ergibt sich, welche Ziffer abgedruckt ist. Aus der zugehörigen Koordinatentransformation bzw. Verschiebung ergibt sich die genaue Position der gedruckten Ziffer. Diese beiden Informationen werden als Zwischenergebnis gespeichert.

Der Vorgang wird nun im wesentlichen wiederholt. Allerdings erfolgen die Untersuchungen nun an jener Stelle in der Gesamtnummer, an der die zweite gedruckte Ziffer vermutet wird. Da die Position der ersten Ziffer bereits bekannt ist, wird diese Information benutzt, um die Position der zweiten gedruckten Ziffer besser abzuschätzen. Der Bereich den die zu untersuchenden Verschiebungen abdecken ist daher kleiner als bei der Untersuchung der ersten gedruckten Ziffer. Es müssen nur noch die Drucktoleranzen, also die möglichen kleinen Positionsschwankungen der gedruckten Ziffern zueinander, berücksichtigt werden. Das Ergebnis gibt an, welche Ziffer gedruckt ist und ihre genaue Position. Der Vorgang wird nun analog für die restlichen 6 gedruckten Ziffern wiederholt.

### Beurteilung der Druckqualität

Durch die vorangegangenen Schritte ist bekannt, welche Ziffern die Nummer enthält und deren genaue Positionen. Zum Vergleich stehen wieder 10 vorbereitete Soll-Bildpunkt-Mengen für die Ziffern 0 bis 9 zur Verfügung. Im Unterschied zum vorhergehenden Schritt eignen sie sich nicht unbedingt zur besonders guten Unterscheidung der Ziffern untereinander, sondern wurden speziell für die Qualitätskontrolle zusammengestellt. Der Vergleich erfolgt mit dem Ist-Bild. Für die erste gedruckte Ziffer wird die entsprechende Punktmenge und die bereits bekannte Koordinatentransformation verwendet. Als Ähnlichkeitsmaß wird die normalisierte Kreuzkorrelation verwendet. Diese liefert einen Wert zwischen 0 und 1, der als Qualitätsmaß dient und abgespeichert wird. Je höher der Wert ist, desto höher ist die Ähnlichkeit und damit die Qualität. Der Vorgang wird analog für die restlichen 7 gedruckten Ziffern wiederholt.

### Beispiel Erkennung von Gefahrenguttafeln auf LKWs

### Aufgabenstellung

Die gelben Gefahrenguttafeln auf LKWs sollen erkannt werden. Eine elektronische Kamera soll den Straßenverkehr überwachen und feststellen, ob an einem Fahrzeug eine Tafel angebracht ist und wenn ja, welche. Es können auch mehrere Tafeln gleichzeitig im Bild sein.

### Erfindungsgemäße Vorgangsweise

Die Lösung ist zweistufig, ähnlich wie bei der Nummernerkennung. In der ersten Stufe wird die mögliche Position der Tafeln erkannt. Hierbei werden Hypothesen über mögliche Positionen aufgestellt. In der zweiten Stufe werden alle hypothetischen Positionen überprüft, ob es sich um eine Tafel handelt und wenn ja, um welche.

Das Bild aus dem Straßenverkehr ist ein Farbbild. Folgende Merkmale werden daraus berechnet:
- Farbmerkmal: Der Gelbton (Intensität der Farbe Gelb) wird in typisch 2 bis 3 Gauß-gewichteten Kompressionsstufen ermittelt. Der Gelbton wird durch eine Gewichtung der Farbkomponenten (Rot, Grün und Blau) des Farbbildes errechnet.
- Strukturmerkmale: Lokale Bildfrequenzen werden durch eine DCT (diskrete Cosinustransformation) ermittelt. Diese Frequenzkomponenten werden durch verschiedene gewichtete Summen zu Strukturmerkmalen kombiniert. Die Art, wie diese Strukturmerkmalswerte aus den Frequenzkomponenten errechnet werden, wird durch ein vorbereitendes Programm und Probeaufnahmen von Gefahrenguttafeln in verschiedenen Lagen und Größen ermittelt.

Die erste Stufe besteht aus der Aufgabe, mögliche Positionen von Tafeln zu finden. Als Soll-Bildpunkt-Menge werden nur ganz wenige Punkte (z.B. 1 bis 4) vorbereitet, da die Tafeln in den komprimierten Merkmalen nur sehr kleine Ausmaße haben.

Im Transformationsspeicher I werden nun alle möglicherweise vorkommenden Verschiebungen und gegebenenfalls Verdrehungen und/oder Vergrößerungen in grobem Raster vorbereitet.

Als Ähnlichkeitsmaß wird eine nach heuristischen Kriterien ermittelte Kombination der bereits erwähnten Farb- und Strukturmerkmale verwendet.

Es werden nun auf der höchsten Kompressionsstufe für alle Transformationen Ähnlichkeitswerte ermittelt. Wenn ein ermittelter Ähnlichkeitswert einen bestimmten, einstellbaren Schwellwert übersteigt, wird die zugehörige Transformation als eine mögliche grobe Lagebestimmung einer Tafel angesehen.

Nachdem die grobe Lage bestimmt ist, wird noch ein Verfeinerungsschritt für jede hypothetische Lage einer Tafel ähnlich den bereits beschriebenen mehrstufigen Lagebestimmungen durchgeführt. Zur verfeinerten Suche wird jedoch die Kompressionsstufe nicht gewechselt, sondern es werden andere Transformationen, die einem feineren Suchraster mit kleinerem Suchbereich entsprechen, und eine größere Anzahl von Punkten gewählt.

Für die Identifikation, ob es sich um eine Tafel handelt und wenn ja, um welche, wird analog zum Beispiel der Nummernerkennung verfahren. Falls sich trotz aller Bemühungen bei der abschließenden Qualitätsprüfung kein guter Ähnlichkeitswert ergibt, wird die betreffende Stelle als "Gefahrenguttafel nicht erkannt" bzw. als "Gefahrenguttafel nicht vorhanden" gewertet.

Es wird darauf hingewiesen, dass jedes der einzelnen, vorangehend beschriebenen Verfahren für sich eine erfinderische Weiterbildung des erfindungsgemäßen Verfahrens darstellte, insbesondere in Hinblick auf die für den jeweiligen Prüfzweck getroffene Auswahl und Aufeinanderfolge der Transformationen, Berechnung der Ähnlichkeitsmaße, Kompressionen bzw. Merkmalsextraktionen und Auswahl der Soll-Bildpunkte.

## Patentansprüche

1. Verfahren zur Prüfung von Gegenständen, z.B. bezüglich Qualität, Identität oder Lage,
- wobei mit einem elektronenoptischen Aufnahmegerät, z.B. einer elektronischen Kamera oder einem Scanner, zumindest ein Ist-Bild des Gegenstandes aufgenommen wird und, gegebenenfalls nach Zwischenspeicherung der Bilddaten, ein Vergleich von Ist-Bildpunkten des Ist-Bildes oder eines Bildbereiches des Ist-Bildes mit Soll-Bildpunkten erfolgt,
- wobei eine Anzahl von Soll-Bildpunkten durch Vorgabe von Koordinaten (x, y, z) und Zuordnung zumindest eines charakteristischen, insbesondere durch Merkmalsart und Merkmalswert festgelegten Merkmales, wie z.B. Grau- oder Farbwerte, Intensitätswerte, Kontrastwerte, Kantenvektoren, Ortsfrequenzen, Helligkeitswechsel zwischen Bildpunkten oder statistischen Kennzahlen, definiert und abgespeichert wird,
- wobei die Koordinaten (x, y, z) der Soll-Bildpunkte zumindest einer nach einem vorgegebenen Kriterium aus einer Anzahl von Soll-Bildpunkt-Mengen ausgewählten Soll-Bildpunkt-Menge zumindest einer vorgegebenen oder ausgewählten Koordinatentransformation unterzogen werden,
- wobei für jede unterschiedliche Transformation und jede der eingesetzten Soll-Bildpunkt-Mengen zumindest ein aus einer Anzahl vorgegebener Ähnlichkeitsmaße ausgewähltes Ähnlichkeitsmaß zwischen den Merkmalen der Soll-Bildpunkte der ausgewählten Soll-Bildpunkt-Menge und den Merkmalen der Ist-Bildpunkte ermittelt wird, die an der(n) durch die transformierten Koordinaten (x', y', z') der Soll-Bildpunkte dieser Soll-Bildpunkt-Menge definierten Stelle(n) gelegen sind, und der (die) erhaltene(n) Ähnlichkeitswert(e) bewertet wird (werden),
- wobei, sofern ein vorgegebenes Abbruchkriterium erfüllt ist oder die ermittelten Ähnlichkeitswerte ein vorgegebenes Abbruchkriterium erfüllen, die Prüfung beendet wird, andernfalls die Prüfung fortgesetzt wird, und
- für die Ermittlung der Ähnlichkeitswerte zumindest eine andere Transformation auf die Koordinaten (x, y, z) der Soll-Bildpunkte angewendet
- und/oder zumindest ein anderes Ähnlichkeitsmaß gewählt,
- und/oder zumindest eine andere Soll-Bildpunkt-Menge herangezogen,
- und/oder zumindest ein anderes Ist-Bild oder ein anderer Bildbereich des Ist-Bildes gewählt wird bzw. werden, **dadurch gekennzeichnet,**
- **dass** zumindest einer Anzahl, vorzugsweise allen, Soll-Bildpunkten jeweils ein Prioritätswert, z.B. eine Zahl, zugeordnet wird, und
- **dass** ein Prioritätswertspeicher mit Bildpunkten bzw. Speicherplätzen erstellt wird, und die Bildpunkte bzw. Speicherplätze des Prioritätswertspeichers den Ist-Bildpunkten zugeordnet oder mit diesen korreliert bzw. die Bildpunkte bzw. Speicherplätze auf das Ist-Bild abgebildet werden,
- **dass** der Prioritätswert eines Soll-Bildpunktes verglichen wird mit dem Prioritätswert des diesem Soll-Bildpunkt über die Transformation der Koordinaten (x,y,z) des Soll-Bildpunktes und die Zuordnung des Ist-Bildes zu den Speicherplätzen des Prioritätswertspeichers (B) zugeordneten Speicherplatzer in Prioritätswertspeicher (B), und
**dass** vorzugsweise allen vorhandenen, reduzierten und/oder extrahierten Datenmengen eines Ist-Bildpunktes ein und derselbe Speicherplatz des Prioritätswertspeichers zugeordnet wird.

2. Verfahren nach Anspruch 1, **dadurch gekennzeichnet, dass** die die Koordinaten und/oder die Merkmale der Ist-Bildpunkte definierenden Datenmengen zumindest einer ausgewählten ein- oder mehrstufigen Kompression und/oder zumindest einer Merkmalsextraktion unterzogen werden, und
- dass bei der Ermittlung des jeweiligen ausgewählten Ähnlichkeitsmaßes bzw. der Ähnlichkeitswerte auch die jeweils für die einzelnen Kompressionsstufen und/oder Extraktionen ermittelten reduzierten bzw. extrahierten Datenmengen von Ist-Bildpunkten herangezogen und den gegebenenfalls reduzierten und/oder extrahierten Datenmengen der jeweils zugeordneten Soll-Bildpunkte gegenübergestellt werden.

3. Verfahren nach Anspruch 1 oder 2 **dadurch gekennzeichnet,**
- **dass** bei Fortsetzung der Prüfung zumindest eine andere Kompressionsweise und/oder zumindest eine andere Kompressionsstufe für die Datenmenge zumindest eines Ist-Bildpunktes und/oder zumindest eine andere Merkmalsextraktion zumindest eines Ist-Bildpunktes herangezogen wird und/oder
- **dass** der beste erhaltene Ähnlichkeitswert sowie die diesem Ähnlichkeitswert zugrundeliegende Transformation sowie die diesem Ähnlichkeitswert zugrundeliegende Soll-Bildpunkt-Menge als Zwischenergebnis angesehen werden und in Abhängigkeit vom besten Ähnlichkeitsmaß und der besten Transformation eine andere Ist-Bildpunkt-Menge zumindest einer Kompression und/oder zumindest einer Merkmalsextraktion unterzogen wird und damit die Prüfung fortgesetzt wird.

4. Verfahren nach einem der Ansprüche 1 bis 3, **dadurch gekennzeichnet,**
- **dass** aufeinanderfolgende Kompressionen von Datenmengen von Ist-Bildpunkten in derselben Kompressionsweise vorgenommen werden und/oder
- **dass** bei jeder Kompression und/oder Extraktion die charakteristischen Merkmale weiterhin erkennbar und definiert bleiben.

5. Verfahren nach einem der Ansprüche 1 bis 4, **dadurch gekennzeichnet, dass** eine Kompression von Datenmengen **dadurch** durchgeführt wird,
- dass aus einer Anzahl, vorzugsweise vier, benachbarter Ist-Bildpunkte ein Mittelwert der entsprechenden Bildpunktmerkmale und/oder Koordinaten berechnet wird oder
- dass eine gewichtete Summe, insbesondere eine Gaußgewichtung in vertikaler und/oder horizontaler Richtung unter Einsatz eines vorgegebenen Reduktionsfaktors, beispielsweise zwei oder Vielfache dieses Wertes für die Merkmale und/oder Koordinaten einer Anzahl zusammenhängender Ist-Bildpunkte errechnet wird, oder
- dass für eine Menge von benachbarten Ist-Bildpunkten ein Merkmal errechnet bzw. ermittelt wird, z.B. die Richtung und/oder die Länge von Kanten, oder
- dass eine diskrete Kosinustransformation der Ortsfrequenzen von Ist-Bildpunkten erfolgt oder
- dass eine Wavelet-Transformation erfolgt oder
- dass eine Bestimmung der Ausprägung und Vorzugsrichtung von Bild- bzw. Musterkanten durch Gabor-Filter erfolgt.

6. Verfahren nach einem der Ansprüche 1 bis 5, **dadurch gekennzeichnet, dass** zur Ermittlung des Ähnlichkeitsmaßes zwischen charakteristischen Merkmalen von Ist-Bildpunkten und Soll-Bildpunkten
- eine gegebenenfalls normierte Kreuzkorrelation der Merkmale, z.B. Farb- bzw. Grauwerte oder Intensitätswerte der Ist-Bildpunkte und Soll-Bildpunkte vorgenommen wird oder
- die Summe der absoluten Differenzen der Merkmale, vorzugsweise der Grau- oder Farbwerte, der jeweiligen Bildpunkte ermittelt wird, wobei diese Differenzen gegebenenfalls gewichtet und/oder potenziert werden,
- wobei gegebenenfalls vor der Ermittlung des Ähnlichkeitsmaßes durch Bildung der absoluten Differenzen von den jeweils berechneten Differenzwerten der Merkmale ein dem jeweiligen Merkmal des Soll-Bildpunktes zugeordneter Toleranzwert subtrahiert wird.

7. Verfahren nach einem der Ansprüche 1 bis 6, **dadurch gekennzeichnet, dass** Soll-Bildpunkte mit demselben Prioritätswert und Merkmalen derselben Merkmalsart zu einer Soll-Bildpunkt-Menge zusammengefasst werden und/oder
- dass jeder Bildpunkt-Speicherplatz des Prioritätswertspeichers nach jeder Neuaufnahme eines Ist-Bildes mit einem vorgegebenen Prioritätswert initialisiert wird.

8. Verfahren nach einem der Ansprüche 1 bis 7, **dadurch gekennzeichnet**, - dass vor Ermittlung des Ähnlichkeitsmaßes ein Vergleich des Prioritätswertes des jeweiligen Soll-Bildpunktes und des Prioritätswertes des zugeordneten Bildpunktes des Prioritätswertspeichers erfolgt, welcher Bildpunkt über die jeweilige Transformation der Koordinaten des Soll-Bildpunktes und die Abbildung des Ist-Bildes auf die Speicherplätze des Prioritätswertspeichers dem jeweiligen Soll-Bildpunkt zugeordnet ist und
- dass für den Fall, dass der Prioritätswert des Soll-Bildpunktes größer oder gleich dem Prioritätswert dieses Bildpunktes ist, die Merkmale dieses Soll-Bildpunktes und seines zugeordneten Ist-Bildpunktes bei Ermittlung des Ähnlichkeitsmaßes berücksichtigt werden und gegebenenfalls der Prioritätswert des Soll-Bildpunktes dem Bildpunkt des Prioritätswertspeichers zugeordnet bzw. auf diesen übertragen wird, und dass für den Fall, dass der Prioritätswert des Soll-Bildpunktes kleiner als der Prioritätswert des Bildpunktes ist, dieses Punktepaar bei Ermittlung des Ähnlichkeitsmaßes bzw. Errechnung des Ähnlichkeitswertes unberücksichtigt bleibt und/oder
- dass die Anzahl der berücksichtigten und/oder nicht berücksichtigten Soll-Bildpunkte bzw. Punktepaare ermittelt und für die Bewertung des Prüfergebnisses bzw. für die Bewertung und allfällige Neuauswahl des Ähnlichkeitsmaßes herangezogen wird und/oder dass die Prioritätswerte von Ist-Bildpunkten, die von einer Prüfung ausgeschlossen werden sollen oder bei Berechnung des Ähnlichkeitsmaßes unberücksichtigt bleiben sollen, vorab auf einen Wert gesetzt werden, der den höchsten Prioritätswert eines Soll-Bildpunktes übersteigt.

9. Verfahren nach einem der Ansprüche 1 bis 8, **dadurch gekennzeichnet, dass** die Soll-Bildpunkte nach empirischen Kriterien ermittelt oder vorgegeben und/oder durch Rechenoperationen ermittelt und/oder aus Soll-Bildern des zu prüfenden Gegenstandes abgeleitet werden und mit vollständiger und/oder reduzierter Datenmenge in einem Soll-Bildpunkt-Speicher, gegebenenfalls einzelnen Soll-Bildpunkt-Mengen zugeteilt, abgelegt werden.

10. Anordnung zur Prüfung von Gegenständen, umfassend ein an eine Auswerteeinheit (30) angeschlossenes elektronenoptisches Aufnahmegerät (A), insbesondere eine elektronische Kamera, z.B. Flächenkamera oder Zeilen- bzw. TDI-Kamera, zur Aufnahme zumindest eines Ist-Bildes des Gegenstandes, und zumindest einen Speicher (C) für die Datenmenge der Ist-Bildpunkte und einen Speicher (H) für die Datenmenge zumindest eines Soll-Bildpunktes, zur Durchführung des Verfahrens nach einem der Ansprüche 1 bis 9,
- wobei in dem Soll-Bildpunktspeicher (H) der Auswerteeinheit (30) eine Anzahl von, gegebenenfalls zu einzelnen Soll-Bildpunkt-Mengen zusammengefaßten, Soll-Bildpunkten mit ihren Koordinaten und zugeordneten charakteristischen Merkmalen, wie z.B. Grau- oder Farbwerten, Intensitätswerten, Kontrastwerten, Kantenvektoren, Ortsfrequenzen, Helligkeitswechsel zwischen Bildpunkten oder statistischen, Kennzahlen, enthalten ist,
- wobei die Auswerteeinheit (30) eine Transformationseinheit (1) aufweist, mit der Koordinaten (x, y, z) von Soll-Bildpunkten zumindest einer, vorzugsweise einer Anzahl unterschiedlicher, auswählbarer Transformation(en) unterzogen werden,
- wobei die Auswerteeinheit (30) eine Einheit (E) zur Bestimmung zumindest eines auswählbaren Ähnlichkeitsmaßes zwischen den Merkmalen zumindest eines Soll-Bildpunktes und den Merkmalen des jeweils zugeordneten Ist-Bildpunktes an der Stelle der transformierten Koordinaten (x', y', z') des Soll-Bildpunktes aufweist und
- wobei die Auswerteeinheit (30) eine Beurteilungseinheit (K), insbesondere für die Erfüllung eines Abbruchkriteriums und/oder für die Beurteilung der(s) sich bei Bestimmung der(s) Ähnlichkeitsmaße(s) ergebenden Ähnlichkeitswerte(s) und/oder Transformationen und/oder Soll-Bildpunkt-Mengen, aufweist,
**dadurch gekennzeichnet,**
- **dass** die Auswerteeinheit (30) einen Prioritätswertspeicher (B) aufweist, dessen Bildpunkte bzw. Speicherplätze den Ist-Bildpunkten in einer wählbaren bzw. festlegbaren Weise zugeordnet und gegebenenfalls für jedes aufgenommene Ist-Bild neu mit vorgegebenen Prioritätswerten initialisierbar sind und
- **dass** die Auswerteeinheit (30) eine Vergleichseinheit (E') aufweist zum Vergleich des Prioritätswertes eines Soll-Bildpunktes mit dem Prioritätswert des diesem Soll-Bildpunkt über die Transformation der Koordinaten (x, y, z) des Soll-Bildpunktes und die Zuordnung des Ist-Bildes zu den Speicherplätzen des Prioritätswertspeichers (B) zugeordneten Speicherplatzes im Prioritätswertspeicher (B).

11. Anordnung nach Anspruch 10, **dadurch gekennzeichnet,**
- **dass** die Auswerteeinheit (30) einen Ist-Bildspeicher (C) und eine Datenkompressions- bzw. Merkmalextraktionseinheit (F) aufweist, in der die für Ist-Bildpunkte des aufgenommenen Bildes erhaltenen Datenmengen betreffend Koordinaten und/oder charakteristische Merkmale zumindest einer ausgewählten ein- oder mehrstufigen Kompression und/oder zumindest einer Merkmalsextraktion unterzogen werden und die reduzierten und/oder extrahierten Datenmengen abgespeichert und zur Ermittlung von Ähnlichkeitsmaßen bereitgestellt sind.

12. Anordnung nach Anspruch 10 oder 11, **dadurch gekennzeichnet, dass** der Datenkompressions- bzw. Merkmalextraktionseinheit (F) ein Speicher (G) zugeordnet ist, in dem eine Anzahl unterschiedlicher, auswählbarer Kompressions- bzw. Extraktionsalgorithmen enthalten ist und/oder
- dass die Transformationseinheit (I) einen Speicher (J) für eine Anzahl von auswählbaren, unterschiedlichen Koordinatentransformationen und/oder eine Recheneinheit zur Berechnung von neuen Transformationen, vorzugsweise in Abhängigkeit von ermittelten Ähnlichkeitswerten, insbesondere in Abhängigkeit von jener Transformation, die zum besten Ähnlichkeitswert geführt hat, aufweist und/oder
- dass der Einheit (E) zur Bestimmung des Ähnlichkeitsmaßes ein Speicher (D) mit einer Anzahl von auswählbaren, unterschiedlichen Algorithmen zur Ermittlung von Ähnlichkeitsmaßen zwischen den Merkmalen der Soll-Bildpunkte und Ist-Bildpunkte zugeordnet ist und/oder
- dass die Datenmengen der einzelnen Soll-Bildpunkte im Soll-Bildpunkt-Speicher (H) für zumindest einen Soll-Bildpunkt zumindest einen diesem zugeordneten Prioritätswert umfassen;

13. Verwendung des erfindungsgemäßen Verfahrens nach einem der Ansprüche 1 bis 9 oder einer erfindungsgemäßen Anordnung nach einem der Ansprüche 10 bis 12 für die Prüfung von Briefmarken, z.B. bezüglich Qualität, Perforation, Banknoten, z.B. bezüglich Kinegram, Ziffern bzw. Werten, gedruckten Mustern bzw. Abbildungen Etiketten, Ausweisen, Chipkarten, Wertkarten, Aufdrucken, Barcodes, Wafern für die Halbleiterproduktion, elektronischen Leiterplatten, Medikamentenschachteln bzw. -behältern, Schriften bzw. Schriftbildern, Bildern, Holzstrukturen, Artefakten, Nummerntafeln, Fahrzeugen, Behältern, Gepäckstücken oder von durch optische Aufnahme ermittelten Bildern, z.B. Videobildem.

## Claims

1. A process for examining objects, for example with respect to quality, identity or location,
- wherein with an electron-optical recording instrument, for example an electronic camera or a scanner, at least one actual image of the object is recorded and, optionally after temporary storage of the image data, a comparison of actual image points of the actual image or of an image region of the actual image with nominal image points is undertaken,
- wherein a number of nominal image points are defined and temporarily stored by presetting of coordinates (x, y, z) and assignment of at least one characteristic feature, established in particular by feature type and feature value, such as, for example, grey-scale or colour values, intensity values, contrast values, edge vectors, spatial frequencies, changes of brightness between image points or statistical characteristics,
- wherein the coordinates (x, y, z) of the nominal image points of at least one set of nominal image points, selected in accordance with a predetermined criterion from a number of sets of nominal image points, are subjected to at least one predetermined or selected coordinate transformation,
- wherein for each different transformation and each of the sets of nominal image points employed at least one measure of similarity, selected from a number of predetermined measures of similarity, between the features of the nominal image points of the selected set of nominal image points and the features of the actual image points that are situated at the place(s) defined by the transformed coordinates (x', y', z') of the nominal image points of this set of nominal image points is ascertained, and the similarity value(s) is (are) evaluated,
- wherein, to the extent that a predetermined termination criterion is satisfied or the ascertained similarity values satisfy a predetermined termination criterion, the examination is concluded, otherwise the examination is continued, and
- for the ascertainment of the similarity values at least one other transformation is applied to the coordinates (x, y, z) of the nominal image points
- and/or at least one other measure of similarity is chosen,
- and/or at least one other set of nominal image points is drawn upon,
- and/or at least one other actual image or one other image region of the actual image is/are chosen, **characterised**
- **in that** a priority value, for example a numerical value, is assigned in each instance to at least a number of nominal image points, preferably to all nominal image points, and
- **in that** a priority-value memory is created with image points or memory locations, and the image points or memory locations of the priority-value memory are assigned to the actual image points or are correlated with the latter or the image points or memory locations are mapped onto the actual image,
- **in that** the priority value of a nominal image point is compared with the priority value of the memory location in the priority-value memory (B) assigned to this nominal image point via the transformation of the coordinates (x, y, z) of the nominal image point and the assignment of the actual image to the memory locations of the priority-value memory (B), and
- **in that** one and the same memory location of the priority-value memory is assigned preferably to all the available, reduced and/or extracted data sets of an actual image point.

2. Process according to Claim 1, **characterised in that** the data sets defining the coordinates and/or the features of the actual image points are subjected to at least one selected one-stage or multi-stage compression and/or at least one extraction of features, and
- **in that** in the course of the ascertainment of the respective selected measure of similarity or of the similarity values the reduced or extracted data sets of actual image points ascertained in each instance for the individual compression stages and/or extractions are also drawn upon and are compared to the optionally reduced and/or extracted data sets of the respectively assigned nominal image points.

3. Process according to Claim 1 or 2, **characterised**
- **in that** in the case of continuation of the examination at least one other compression mode and/or at least one other compression stage for the data set of at least one actual image point and/or at least one other extraction of features of at least one actual image point is drawn upon and/or
- **in that** the best similarity value obtained and also the transformation underlying this similarity value as well as the set of nominal image points underlying this similarity value are regarded as an interim result and, depending on the best measure of similarity and the best transformation, another set of actual image points is subjected to at least one compression and/or at least one extraction of features and hence the examination is continued.

4. Process according to one of Claims 1 to 3, **characterised**
- **in that** successive compressions of data sets of actual image points are performed in the same compression mode and/or
- **in that** in the course of each compression and/or extraction the characteristic features still remain recognisable and defined.

5. Process according to one of Claims 1 to 4, **characterised in that** a compression of data sets is carried out
- by a mean value of the corresponding image-point features and/or coordinates being computed from a number of - preferably four - adjacent actual image points or
- by a weighted sum, in particular a Gaussian weighting in the vertical and/or horizontal direction, being calculated using a predetermined reduction factor, for example two, or multiples of this value, for the features and/or coordinates of a number of contiguous actual image points, or
- by a feature, for example the direction and/or the length of edges, being calculated or ascertained for a set of adjacent actual image points, or
- by a discrete cosine transformation of the spatial frequencies of actual image points being effected or
- by a wavelet transformation being effected or
- by a determination of the distinctness of character and preferential direction of image edges or pattern edges being effected by means of Gabor filters.

6. Process according to one of Claims 1 to 5, **characterised in that** for the purpose of ascertaining the measure of similarity between characteristic features of actual image points and nominal image points
- an optionally normalised cross-correlation of the features, for example colour or grey-scale values or intensity values, of the actual image points and nominal image points is performed or
- the sum of the absolute differences of the features, preferably of the grey-scale or colour values, of the respective image points is ascertained, these differences being optionally weighted and/or exponentiated,
- wherein optionally prior to the ascertainment of the measure of similarity by creation of the absolute differences from the respectively computed difference values of the features a tolerance value assigned to the respective feature of the nominal image point is subtracted.

7. Process according to one of Claims 1 to 6, **characterised**
- **in that** nominal image points with the same priority value and with features of the same feature type are combined into a set of nominal image points and/or
- **in that** each image-point memory location of the priority-value memory is initialised with a predetermined priority value after each re-recording of an actual image.

8. Process according to one of Claims 1 to 7, **characterised**
- **in that** prior to ascertaining the measure of similarity a comparison of the priority value of the respective nominal image point and of the priority value of the assigned image point of the priority-value memory is undertaken, said image point being assigned to the respective nominal image point via the respective transformation of the coordinates of the nominal image point and the mapping of the actual image onto the memory locations of the priority-value memory and
- **in that** for the case where the priority value of the nominal image point is greater than or equal to the priority value of this image point the features of this nominal image point and of its assigned actual image point are taken into account when ascertaining the measure of similarity, and optionally the priority value of the nominal image point is assigned to the image point of the priority-value memory or is transmitted to the latter, and in that for the case where the priority value of the nominal image point is less than the priority value of the image point this pair of points is left out of account when ascertaining the measure of similarity or calculating the similarity value and/or
- **in that** the number of nominal image.points or pairs of points taken into account and/or not taken into account is ascertained and is drawn upon for the evaluation of the result of the examination or for the evaluation and contingent reselection of the measure of similarity and/or in that the priority values of actual image points that are to be excluded from an examination or that are to be left out of account when computing the measure of similarity are set in advance to a value that exceeds the highest priority value of a nominal image point.

9. Process according to one of Claims 1 to 8, **characterised in that** the nominal image points are ascertained or predetermined in accordance with empirical criteria and/or are ascertained by arithmetic operations and/or derived from nominal images of the object to be examined and are saved, with complete and/or reduced data set, in a nominal-image-point memory, optionally allocated to individual sets of nominal image points.

10. An arrangement for examining objects, comprising an electron-optical recording instrument (A) - in particular an electronic camera, for example an area-scan camera or line-scan camera or TDI camera - linked to an evaluating unit (30), for recording at least one actual image of the object, and at least one memory (C) for the data set of the actual image points and a memory (H) for the data set of at least one nominal image point, for implementing the process according to one of Claims 1 to 9,
- wherein a number of nominal image points, optionally combined into individual sets of nominal image points, with their coordinates and assigned characteristic features, such as, for example, grey-scale or colour values, intensity values, contrast values, edge vectors, spatial frequencies, changes of brightness between image points or statistical characteristics, are contained in the nominal-image-point memory (H) of the evaluating unit (30),
- wherein the evaluating unit (30) exhibits a transformation unit (I) with which coordinates (x, y, z) of nominal image points are subjected to at least one selectable transformation, preferably to a number of different selectable transformations,
- wherein the evaluating unit (30) exhibits a unit (E) for determining at least one selectable measure of similarity between the features of at least one nominal image point and the features of the respectively assigned actual image point at the place of the transformed coordinates (x', y', z') of the nominal image point and
- wherein the evaluating unit (30) exhibits an assessment unit (K), in particular for the fulfilment of a termination criterion and/or for the assessment of the similarity value(s) arising when determining the measure(s) of similarity and/or transformations and/or sets of nominal image points,
**characterised**
- **in that** the evaluating unit (30) exhibits a priority-value memory (B), the image points or memory locations of which are assigned to the actual image points in a selectable or definable manner and are optionally capable of being re-initialised with predetermined priority values for each recorded actual image and
- **in that** the evaluating unit (30) exhibits a comparison unit (E') for comparison of the priority value of a nominal image point with the priority value of the memory location in the priority-value memory (B) assigned to this nominal image point via the transformation of the coordinates (x, y, z) of the nominal image point and the assignment of the actual image to the memory locations of the priority-value memory (B).

11. Arrangement according to Claim 10, **characterised**
- **in that** the evaluating unit (30) exhibits an actual-image memory (C) and a data-compression and feature-extraction unit (F) in which the data sets obtained for actual image points of the recorded image, relating to coordinates and/or characteristic features, are subjected to at least one selected one-stage or multi-stage compression and/or to at least one extraction of features, and the reduced and/or extracted data sets are stored and made available for the purpose of ascertaining measures of similarity.

12. Arrangement according to Claim 10 or 11, **characterised**
**in that** a memory (G) in which a number of different, selectable compression or extraction algorithms are contained is assigned to the data-compression and feature-extraction unit (F) and/or
- **in that** the transformation unit (I) exhibits a memory (J) for a number of selectable, different coordinate transformations and/or an arithmetic unit for computing new transformations, preferably depending on ascertained similarity values, in particular depending on that transformation which has resulted in the best similarity value and or
- **in that** a memory (D) with a number of selectable, different algorithms for ascertaining measures of similarity between the features of the nominal image points and actual image points is assigned to the unit (E) for determining the measure of similarity and/or
- **in that** the data sets of the individual nominal image points in the nominal-image-point memory (H) for at least one nominal image point comprise at least one priority value assigned to said nominal image point.

13. Use of the process according to the invention as set forth in one of Claims 1 to 9, or of an arrangement according to the invention as set forth in one of Claims 10 to 12, for the examination of postage stamps, for example with respect to quality, perforation; banknotes, for example with respect to Kinegram, numerals or values; printed patterns or illustrations, labels, identity cards, chip cards, prepayment cards, imprints, barcodes, wafers for the production of semiconductors, electronic printed circuit boards, medicament boxes or medicament containers, documents or document images, images, wooden structures, artefacts, registration plates, vehicles, containers, luggage items, or of images ascertained by optical recording, for example video images.

## Revendications

1. Procédé de contrôle d'objets, par exemple de leur qualité, de leur identité ou de leur position,
- dans lequel on enregistre au moyen d'un appareil d'enregistrement électro-optique, par exemple une caméra électronique ou un scanner, au moins une image réelle de l'objet et, le cas échéant après un stockage intermédiaire des données d'images, on effectue une comparaison de pixels de l'image réelle ou d'une zone de l'image réelle avec des pixels théoriques,
- dans lequel on définit et on mémorise un nombre de pixels théoriques en prédéfinissant des coordonnées (x, y, z) et en affectant au moins un attribut caractéristique, défini notamment par un type d'attribut et une valeur d'attribut, par exemple des valeurs de gris ou de couleurs, des valeurs d'intensité, des valeurs de contraste, des vecteurs d'arête, des fréquences de lieux, des variations de luminosité entre pixels ou des paramètres statistiques,
- dans lequel on soumet les coordonnées (x, y, z) des pixels théoriques d'au moins un ensemble de pixels théoriques sélectionné selon un critère prédéterminé à partir d'un nombre d'ensembles de pixels théoriques à au moins une transformation de coordonnées prédéterminée ou sélectionnée,
- dans lequel, pour chaque transformation différente et pour chaque ensemble de pixels théoriques utilisé, on détermine au moins un degré de similitude choisi parmi un nombre de degrés de similitude prédéterminés entre les attributs des pixels théoriques de l'ensemble de pixels théoriques choisi et les attributs des pixels réels qui sont placés à ou aux endroits définis par les coordonnées transformées (x', y', z') des pixels théoriques de cet ensemble de pixels théoriques et on évalue la ou les valeurs de similitude obtenues,
- dans lequel, dès lors qu'un critère d'interruption prédéterminé est satisfait ou bien que les valeurs de similitude déterminées satisfont un critère d'interruption prédéterminé, on met fin au contrôle, dans le cas contraire on poursuit le contrôle, et
- pour déterminer les valeurs de similitude, on utilise au moins une autre transformation sur les coordonnées (x, y, z) des pixels théoriques
- et/ou on choisit au moins un autre degré de similitude
- et/ou on utilise au moins un autre ensemble de pixels théoriques
- et/ou on choisit au moins une autre image réelle ou une autre zone de l'image réelle, **caractérisé en ce que**
- on affecte respectivement à au moins un nombre, de préférence à la totalité, des pixels théoriques une valeur de priorité, par exemple un chiffre, et
- on crée une mémoire de priorité avec des pixels ou des emplacements de stockage et on affecte les pixels ou les emplacements de stockage de la mémoire de priorité aux pixels réels ou on les corrèle avec ceux-ci ou bien on reproduit les pixels ou les emplacements de stockage sur l'image réelle,
- on compare la valeur de priorité d'un pixel théorique avec la valeur de priorité de l'emplacement de stockage affecté dans la mémoire de valeurs de priorité (B) à ce pixel théorique par la transformation des coordonnées (x, y, z) du pixel théorique et l'affectation de l'image réelle aux emplacements de stockage de la mémoire de valeurs de priorité (B) et, de préférence, on affecte à tous les ensembles de données réduits et/ou extraits existants pour un pixel réel un seul et même emplacement de stockage dans la mémoire de valeurs de priorité.

2. Procédé selon la revendication 1, **caractérisé en ce que**
- on soumet les ensembles de données définissant les coordonnées et/ou les attributs des pixels réels à au moins une compression en une seule ou à plusieurs étapes sélectionnée et/ou à au moins une extraction d'attributs, et
- lors de la détermination du degré de similitude respectif choisi ou des valeurs de similitude, on utilise aussi les ensembles de données réduits et/ou extraits, établis pour les différentes étapes de compression et/ou extractions, des pixels réels et on les confronte avec les ensembles de données le cas échéant réduits et/ou extraits des pixels théoriques respectifs affectés.

3. Procédé selon la revendication 1 ou la revendication 2, **caractérisé en ce que**
- en cas de poursuite du contrôle, on utilise au moins un autre mode de compression et/ou au moins une autre étape de compression pour l'ensemble de données d'au moins un pixel réel et/ou au moins une autre extraction d'attributs d'au moins un pixel réel, et/ou
- on considère la meilleure valeur de similitude obtenue ainsi que la transformation à la base de cette valeur de similitude ainsi que l'ensemble de pixels théoriques à la base de cette valeur de similitude comme un résultat intermédiaire et, en fonction du meilleur degré de similitude et de la meilleure transformation, on soumet un autre ensemble de pixels réels à au moins une compression et/ou à au moins une extraction d'attributs et donc on poursuit le contrôle.

4. Procédé selon l'une des revendications 1 à 3, **caractérisé en ce que**
- on effectue des compressions successives d'ensembles de données de pixels réels selon le même mode de compression et/ou
- les attributs caractéristiques restent décelables et définis lors de chaque compression et/ou extraction.

5. Procédé selon l'une des revendications 1 à 4, **caractérisé en ce que** l'on effectue une compression d'ensembles de données
- en calculant à partir d'un nombre de pixels réels voisins, de préférence quatre, une moyenne des attributs et/ou coordonnées de pixels correspondants, ou
- en calculant une somme pondérée, en particulier une pondération gaussienne dans le sens vertical et/ou horizontal, en utilisant un coefficient de réduction prédéfini, par exemple deux ou un multiple de cette valeur pour les attributs et/ou coordonnées d'un nombre de pixels réels contigus, ou
- en calculant ou déterminant pour un ensemble de pixels réels voisin un attribut, par exemple la direction et/ou la longueur d'arêtes, ou
- en effectuant une transformation cosinus discrète des fréquences de lieux de pixels réels, ou
- en effectuant une transformation par ondelettes, ou
- en déterminant la catégorie et la direction préférentielle d'arêtes d'image ou de trame au moyen d'un filtre de Gabor.

6. Procédé selon l'une des revendications 1 à 5, **caractérisé en ce que**, pour déterminer le degré de similitude entre des attributs caractéristiques de pixels réels et de pixels théoriques,
- on effectue une corrélation croisée, le cas échéant normée, des attributs, par exemple des valeurs de couleurs ou de gris ou des valeurs d'intensité des pixels réels et des pixels théoriques, ou
- on détermine la somme des différences absolues des attributs, de préférence des valeurs de gris ou de couleurs, des différents pixels, ces différences étant le cas échéant pondérées et/ou élevées à une puissance plus haute,
- le cas échéant, avant de déterminer le degré de similitude en formant les différences absolues des différences calculées pour chaque attribut, on soustrait une valeur de tolérance affectée à chaque attribut du pixel théorique.

7. Procédé selon l'une des revendications 1 à 6, **caractérisé en ce que**
- on regroupe des pixels théoriques ayant la même valeur de priorité et des attributs de la même classe d'attributs en un ensemble de pixels théoriques, et/ou
- on initialise chaque emplacement de stockage de pixel de la mémoire de valeurs de priorité après chaque nouvel enregistrement d'une image réelle avec une valeur de priorité prédéfinie.

8. Procédé selon l'une des revendications 1 à 7, **caractérisé en ce que**
- avant de déterminer le degré de similitude, on effectue une comparaison de la valeur de priorité de chaque pixel théorique et de la valeur de priorité du pixel affecté dans la mémoire de valeur de priorités et, par la transformation respective des coordonnées du pixel théorique et la reproduction de l'image réelle sur les emplacements de stockage de la mémoire de valeurs de priorités, on affecte ce pixel à chaque pixel théorique, et
- dans le cas où la valeur de priorité du pixel théorique est supérieure ou égale à la valeur de priorité de ce pixel, on tient compte des attributs de ce pixel théorique et du pixel réel qui lui est affecté lors de la détermination du degré de similitude et, le cas échéant, on affecte la valeur de priorité du pixel théorique au pixel de la mémoire de valeurs de priorité ou on la transfère dans celle-ci et, dans le cas où la valeur de priorité du pixel théorique est inférieure à la valeur de priorité du pixel, on ne tient pas compte de cette paire de pixels dans la détermination du degré de similitude ou dans le calcul de la valeur de similitude, et/ou
- on détermine le nombre des pixels théoriques ou paires de pixels pris en compte et/ou non pris en compte et on l'utilise pour évaluer le résultat du contrôle ou pour évaluer et éventuellement sélectionner à nouveau le degré de similitude et/ou on fixe au préalable les valeurs de priorité de pixels réels qui doivent être exclus d'un contrôle ou qui ne doivent pas être pris en compte dans le calcul du degré de similitude à une valeur supérieure à la valeur de priorité la plus élevée d'un pixel théorique.

9. Procédé selon l'une des revendications 1 à 8, **caractérisé en ce que** l'on détermine ou prédéfinit les pixels théoriques selon des critères empiriques et/ou on les détermine par des opérations de calcul et/ou on les dérive d'images théoriques de l'objet à contrôler et on les mémorise avec un ensemble de données complet et/ou réduit dans une mémoire de pixels théoriques, le cas échéant en les affectant à des ensembles individuels de pixels théoriques.

10. Dispositif de contrôle d'objets, comprenant un appareil d'enregistrement électro-optique (A), notamment une caméra électronique, par exemple une caméra zonale ou une caméra ligne à ligne ou TDI, relié à un module de traitement (30), pour enregistrer au moins une image réelle de l'objet, et au moins une mémoire (C) pour l'ensemble de données des pixels réels et une mémoire (H) pour l'ensemble de données d'au moins un pixel théorique, pour réaliser le procédé selon l'une des revendications 1 à 9,
- dans lequel la mémoire de pixels théoriques (H) du module de traitement (30) contient un nombre de pixels théoriques, le cas échéant regroupés dans des ensembles individuels de pixels théoriques, avec leurs coordonnées et des attributs caractéristiques qui leur sont affectés, par exemple des valeurs de gris ou de couleurs, des valeurs d'intensité, des valeurs de contraste, des vecteurs d'arête, des fréquences de lieux, des variations de luminosité entre pixels ou des paramètres statistiques,
- dans lequel le module de traitement (30) présente un module de transformation (I) au moyen duquel les coordonnées (x, y, z) de pixels théoriques sont soumises à au moins une, de préférence à un certain nombre de transformations différentes sélectionnables,
- dans lequel le module de traitement (30) présente un module (E) pour déterminer au moins un degré de similitude sélectionnable entre les attributs d'au moins un pixel théorique et les attributs du pixel réel qui lui est affecté à l'endroit des coordonnées transformées (x', y', z') du pixel théorique, et
- dans lequel le module de traitement (30) présente un module d'évaluation (K), notamment pour satisfaire un critère d'interruption et/ou pour évaluer la ou les valeurs de similitude résultant de la détermination du ou des degrés de similitude et/ou les transformations et/ou les ensembles de pixels théoriques,
**caractérisé en ce que**
- le module de traitement (30) présente une mémoire de valeurs de priorité (B) dont les pixels ou les emplacements de stockage sont affectés aux pixels réels de manière sélectionnable ou définissable et qui peut le cas échéant être réinitialisée pour chaque image réelle enregistrée avec des valeurs de priorité prédéfmies, et
- le module de traitement (30) présente un module de comparaison (E') pour comparer la valeur de priorité d'un pixel théorique avec la valeur de priorité de l'emplacement de stockage affecté dans la mémoire de valeurs de priorité (B) à ce pixel théorique par la transformation des coordonnées (x, y, z) du pixel théorique et l'affectation de l'image réelle aux emplacements de stockage de la mémoire de valeurs de priorité (B).

11. Dispositif selon la revendication 10, **caractérisé en ce que**
- le module de traitement (30) présente une mémoire d'images réelles (C) et un module de compression de données ou d'extraction d'attributs (F) dans lequel les ensembles de données obtenus pour des pixels réels de l'image enregistrée sont soumis en ce qui concerne les coordonnées et/ou des attributs caractéristiques à au moins une compression en une ou plusieurs étapes sélectionnée et/ou à au moins une extraction d'attributs et les ensembles de données réduits et/ou extraits sont stockés en mémoire et tenus à disposition pour la détermination des degrés de similitude.

12. Dispositif selon la revendication 10 ou la revendication 11, **caractérisé en ce que**
- il est affecté au module de compression de données ou d'extraction d'attributs (F) une mémoire (G) contenant un nombre d'algorithmes de compression ou extraction différents sélectionnables, et/ou
- le module de transformation (I) présente une mémoire (J) pour un nombre de transformations de coordonnées différentes sélectionnables et/ou un module de calcul pour calculer de nouvelles transformations, de préférence en fonction de valeurs de similitude déterminées, en particulier en fonction de la transformation qui a donné la meilleure valeur de similitude, et/ou
- il est affecté au module (E) pour déterminer le degré de similitude une mémoire (D) avec un nombre d'algorithmes différents sélectionnables pour déterminer des degrés de similitude entre les attributs des pixels théoriques et des pixels réels, et/ou
- les ensembles de données des différents pixels théoriques dans la mémoire de pixels théoriques (H) comprennent, pour au moins un pixel théorique, au moins une valeur de priorité allouée à ce dernier.

13. Utilisation du procédé de l'invention selon l'une des revendications 1 à 9 ou d'un dispositif de l'invention selon l'une des revendications 10 à 12 pour contrôler des timbres postes, par exemple leur qualité, leur perforation, des billets de banques, par exemple leurs hologrammes, leurs chiffres ou leurs valeurs, des motifs imprimés ou des illustrations, des étiquettes, des cartes d'identité, des cartes à puce, des cartes bancaires, des impressions en surcharge, des codes à barres, des tranches pour la fabrication de semi-conducteurs, des circuits imprimés électroniques, des boîtes ou des emballages de médicaments, des textes ou des graphismes, des images, des structures en bois, des objets artisanaux, des tableaux de chiffres, des véhicules, des récipients, des bagages ou des images obtenues par enregistrement optique, par exemple des images vidéo.
